# EUROPEAN PATENT APPLICATION

(11) **EP 4 462 861 A1**
(43) Date of publication of application: **13.11.2024**
(21) Application number: 23745891.4
(22) Date of filing: 09.01.2023
(51) Int. Cl.: H04W 28/08

(54) **INFORMATION TRANSMISSION METHOD AND APPARATUS**

(30) Priority: 30.01.2022 CN 202210114476
(71) Applicant: Huawei Technologies Co., Ltd., Shenzhen, Guangdong 518129 (CN)
(72) Inventor: ZHANG, Yangyang, Shenzhen, Guangdong 518129 (CN); YU, Zheng, Shenzhen, Guangdong 518129 (CN)
(74) Representative: Isarpatent
(86) International application number: PCT/CN2023/071333
(87) International publication number: WO 2023/143007

(57) **Abstract**

Embodiments of this application provide an information transmission method and apparatus, to report different capabilities of different terminal device forms. According to the method provided in this application, a terminal device can independently report a first capability and/or a second capability. The first capability is related to a maximum radio frequency processing bandwidth, and the second capability is related to a maximum baseband processing bandwidth. This implements decoupled reporting of the maximum radio frequency processing bandwidth and/or the maximum baseband bandwidth. According to the solutions in this application, flexible reporting manners can be provided for terminal devices in different forms or different types to report capabilities, thereby meeting different commercial application and cost requirements.

## Description

This application claims priority to Chinese Patent Application No. 202210114476.2, filed with the China National Intellectual Property Administration on January 30, 2022 and entitled "INFORMATION TRANSMISSION METHOD AND APPARATUS", which is incorporated herein by reference in its entirety.

### TECHNICAL FIELD

Embodiments of this application relate to the communication field, and more specifically, to an information transmission method and apparatus.

### BACKGROUND

That a maximum channel bandwidth of a terminal device (for example, a reduced capability (reduced capability, RedCap) terminal device) at a low frequency (for example, frequency range 1 (frequency range 1, FR1)) is 20 MHz is determined in the 3rd Generation Partnership Project (the 3rd Generation Partnership Project, 3GPP). A maximum radio frequency processing bandwidth of the RedCap terminal device and a maximum baseband processing bandwidth of the RedCap terminal device match the maximum channel bandwidth of the terminal device. Research on RedCap terminal devices is started in the 3GPP, aiming to design a RedCap terminal device that meets performance requirements of the Internet of things market and has low implementation complexity, to expand application of an NR system in the Internet of things market.

The maximum channel bandwidth and/or a peak rate of the RedCap terminal device in the FR1 is further reduced in the new radio (new radio, NR) release 18 (release 18, R18). However, Internet of things application is diversified, and different terminal device forms are required to match different business scenarios. Therefore, reporting different processing capabilities of the RedCap terminal devices becomes a technical problem that needs to be resolved.

### SUMMARY

Embodiments of this application provide an information transmission method and apparatus, to report different capabilities of different terminal device forms.

According to a first aspect, an information transmission method is provided. The method may be performed by a terminal device, or may be performed by a component (for example, a chip or a circuit) of the terminal device. This is not limited.

The method includes: The terminal device reports a first capability and/or a second capability to a network device. The first capability includes at least one or more of the following: a maximum radio frequency processing bandwidth supported by the terminal device, a maximum radio frequency processing capability supported by the terminal device, a maximum channel bandwidth supported by the terminal device, that the terminal device supports information transmission on N resource blocks, that the terminal device supports a bandwidth decrease, or that the terminal device supports scheduling limitation, where N is an integer greater than 0. The second capability includes at least one or more of the following: a maximum baseband processing bandwidth supported by the terminal device, a maximum baseband processing capability supported by the terminal device, that the terminal device supports information transmission on M resource blocks, that the terminal device does not support a bandwidth decrease, a maximum transport block size supported by the terminal device, a maximum modulation and coding scheme MCS index supported by the terminal device, a scaling factor, or that the terminal device does not support scheduling limitation, where M is an integer greater than 0. The terminal device obtains a resource allocated by the network device, and sends or receives information on the resource.

According to the foregoing technical solutions, in this application, the terminal device can independently report the maximum radio frequency processing bandwidth and the maximum baseband processing bandwidth, to implement decoupled reporting of maximum channel bandwidths and/or maximum processing bandwidths of a radio frequency and a baseband. A reporting manner of the terminal device can be more flexible. The maximum radio frequency processing bandwidth and the maximum baseband processing bandwidth of the terminal device may be the same, or may be different. In other words, there may be different forms or different types of terminal devices. According to the solutions in this application, flexible reporting manners can be provided for the terminal devices in different forms or different types to report capabilities. For example, the maximum radio frequency processing bandwidth and the maximum baseband processing bandwidth of the terminal device are different. If decoupled reporting of the maximum radio frequency processing bandwidth and the maximum baseband processing bandwidth cannot be implemented, when allocating the resource used for information transmission, the network device may consider only the maximum radio frequency processing bandwidth, and the allocated resource may exceed a maximum baseband processing bandwidth capability supported by the terminal device. When the information is transmitted from the radio frequency to the baseband, the baseband cannot ensure that the information can be correctly received. According to the technical method in this application, when allocating the resource used for the information transmission, the network device can consider both the maximum radio frequency processing bandwidth and the maximum baseband processing bandwidth, to ensure proper resource allocation or resource scheduling, thereby improving data transmission performance of the terminal device. In addition, different factors such as costs, implementation complexity (storage and computing resources), processing delays, compatibility, scenarios, deployment scenarios, and commercial application are considered. The terminal devices in different forms or different types have different requirements on baseband capabilities (like bandwidths) or radio frequency capabilities (like bandwidths). In the foregoing capability reporting manner, compromise and adaptation can be implemented on the foregoing factors to a maximum extent.

In a possible implementation, that the terminal device reports a first capability and/or a second capability to a network device includes: The terminal device reports the first capability to the network device based on a first capability parameter, and/or the terminal device reports the second capability to the network device based on a second capability parameter. Alternatively, the terminal device reports the first capability or the second capability to the network device based on a third capability parameter. Alternatively, the terminal device reports the first capability and the second capability to the network device based on a fourth capability parameter.

In a possible implementation, the first capability is indicated by the first capability parameter or the third capability parameter, and the second capability is predefined. Alternatively, the first capability is predefined, and the second capability is indicated by the second capability parameter or the third capability parameter.

According to the foregoing technical solutions, in this application, the terminal device may flexibly report the first capability and/or the second capability in different manners. The first capability and the second capability may be indicated by a same capability parameter, the first capability and the second capability may be indicated by different capability parameters, or the first capability and/or the second capability may be predefined.

A dynamic indication based on a plurality of pieces of separate signaling can maximize indication flexibility. A joint dynamic indication based on a single piece of signaling can maximize the indication flexibility, reduce signaling overheads, and reduce an indication delay. In addition, a manner of combining a signaling dynamic indication and preconfiguration is considered, and the indication flexibility and the signaling overheads can be compromised. The signaling overheads can be minimized through constraint of predefining.

In a possible implementation, the method further includes: The terminal device sends a fifth capability parameter to the network device. The fifth capability parameter indicates that the terminal device supports reporting of the first capability and/or the second capability, or the fifth capability parameter indicates that the terminal device does not support reporting of the first capability and/or the second capability. Alternatively, the fifth capability parameter indicates that the terminal device supports reporting of the first capability and/or the second capability, or the fifth capability parameter indicates a third capability of the terminal device, where the third capability includes at least the maximum channel bandwidth supported by the terminal device.

According to the foregoing technical solutions, the method provided in this application may further flexibly indicate a capability that the terminal device supports reporting. The terminal device may choose to support reporting of the first capability and/or the second capability, and the terminal device may choose not to support reporting of the first capability and/or the second capability. When the terminal device does not support reporting of the first capability and/or the second capability, the terminal device supports reporting of the third capability. When the terminal device does not support reporting of the third capability, the terminal device supports reporting of the first capability and/or the second capability. This method provides a "switch" for capability reporting, so that this function is an optional feature. The terminal may selectively report some capabilities according to an indication of this method, to reduce the signaling overheads. In addition, this method can disable all reporting capabilities. The terminal may roll back to a reduced capability (a default capability, a predefined capability, or the like), or roll back to a previous release (like R-16 RedCap or LTE eMTC/mMTC/NB-IoT), to provide a possible manner to implement compatibility and reduce impact on standards.

According to a second aspect, an information transmission method is provided. The method may be performed by a network device, or may be performed by a component (for example, a chip or a circuit) of the network device. This is not limited.

The method includes: The network device obtains a first capability and/or a second capability of a terminal device. The first capability includes at least one or more of the following: a maximum radio frequency processing bandwidth supported by the terminal device, a maximum radio frequency processing capability supported by the terminal device, a maximum channel bandwidth supported by the terminal device, that the terminal device supports information transmission on N resource blocks, that the terminal device supports a bandwidth decrease, or that the terminal device supports scheduling limitation, where N is an integer greater than 0. The second capability includes at least one or more of the following: a maximum baseband processing bandwidth supported by the terminal device, a maximum baseband processing capability supported by the terminal device, that the terminal device supports information transmission on M resource blocks, that the terminal device does not support a bandwidth decrease, a maximum transport block size supported by the terminal device, a maximum modulation and coding scheme MCS index supported by the terminal device, a scaling factor, or that the terminal device does not support scheduling limitation, where M is an integer greater than 0. The network device indicates an allocated resource to the terminal device, and receives or sends information on the resource.

According to the foregoing technical solutions, in this application, the network device may receive the capability reported by the terminal device. The terminal device can independently report the maximum radio frequency processing bandwidth and the maximum baseband processing bandwidth, to implement decoupled reporting of maximum channel bandwidths and/or maximum processing bandwidths of a radio frequency and a baseband. A reporting manner of the terminal device can be more flexible. The maximum radio frequency processing bandwidth and the maximum baseband processing bandwidth of the terminal device may be the same, or may be different. In other words, there may be different forms or different types of terminal devices. According to the solutions in this application, flexible reporting manners can be provided for the terminal devices in different forms or different types to report capabilities. For example, the maximum radio frequency processing bandwidth and the maximum baseband processing bandwidth of the terminal device are different. If decoupled reporting of the maximum radio frequency processing bandwidth and the maximum baseband processing bandwidth cannot be implemented, when allocating the resource used for information transmission, the network device may consider only the maximum radio frequency processing bandwidth, and the allocated resource may exceed a maximum baseband processing bandwidth capability supported by the terminal device. When the information is transmitted from the radio frequency to the baseband, the baseband cannot ensure that the information can be correctly received. According to the technical method in this application, when allocating the resource used for the information transmission, the network device can consider both the maximum radio frequency processing bandwidth and the maximum baseband processing bandwidth, to ensure proper resource allocation or resource scheduling, thereby improving data transmission performance of the terminal device. In addition, different factors such as costs, implementation complexity (storage and computing resources), processing delays, compatibility, scenarios, deployment scenarios, and commercial application are considered. The terminal devices in different forms or different types have different requirements on baseband capabilities (like bandwidths) or radio frequency capabilities (like bandwidths). In the foregoing capability reporting manner, compromise and adaptation can be implemented on the foregoing factors to a maximum extent.

In a possible implementation, that the network device obtains a first capability and/or a second capability of a terminal device includes: The network device receives a first capability parameter of the terminal device, where the first capability parameter indicates the first capability, and/or the network device receives a second capability parameter of the terminal device, where the second capability parameter indicates the second capability. Alternatively, the network device receives a third capability parameter of the terminal device, where the third capability parameter indicates the first capability or the second capability. Alternatively, the network device receives a fourth capability parameter of the terminal device, where the fourth capability parameter indicates the first capability and the second capability.

In a possible implementation, the first capability is indicated by the first capability parameter or the third capability parameter, and the second capability is predefined. Alternatively, the first capability is predefined, and the second capability is indicated by the second capability parameter or the third capability parameter.

According to the foregoing technical solutions, in this application, the terminal device may flexibly report the first capability and/or the second capability in different manners. The first capability and the second capability may be indicated by a same capability parameter, the first capability and the second capability may be indicated by different capability parameters, or the first capability and/or the second capability may be predefined.

A dynamic indication based on a plurality of pieces of separate signaling can maximize indication flexibility. A joint dynamic indication based on a single piece of signaling can maximize the indication flexibility, reduce signaling overheads, and reduce an indication delay. In addition, a manner of combining a signaling dynamic indication and preconfiguration is considered, and the indication flexibility and the signaling overheads can be compromised. The signaling overheads can be minimized through constraint of predefining.

In a possible implementation, the method further includes: The network device receives a fifth capability parameter of the terminal device. The fifth capability parameter indicates that the terminal device supports reporting of the first capability and/or the second capability, or the fifth capability parameter indicates that the terminal device does not support reporting of the first capability and/or the second capability. Alternatively, the fifth capability parameter indicates that the terminal device supports reporting of the first capability and/or the second capability, or the fifth capability parameter indicates a third capability of the terminal device, where the third capability includes at least the maximum channel bandwidth supported by the terminal device.

According to the foregoing technical solutions, the method provided in this application may further flexibly indicate a capability that the terminal device supports reporting. The terminal device may choose to support reporting of the first capability and/or the second capability, and the terminal device may choose not to support reporting of the first capability and/or the second capability. When the terminal device does not support reporting of the first capability and/or the second capability, the terminal device supports reporting of the third capability. When the terminal device does not support reporting of the third capability, the terminal device supports reporting of the first capability and/or the second capability. This method provides a "switch" for capability reporting, so that this function is an optional feature. The terminal may selectively report some capabilities according to an indication of this method, to reduce the signaling overheads. In addition, this method can disable all reporting capabilities. The terminal may roll back to a reduced capability (a default capability, a predefined capability, or the like), or roll back to a previous release (like R-16 RedCap or LTE eMTC/mMTC/NB-IoT), to provide a possible manner to implement compatibility and reduce impact on standards.

According to a third aspect, an information transmission method is provided. The method may be performed by a terminal device, or may be performed by a component (for example, a chip or a circuit) of the terminal device. This is not limited.

The method includes: The terminal device reports a fourth capability to a network device. The fourth capability includes that the terminal device supports a bandwidth part BWP being greater than a first characteristic parametric value of the terminal device, and the first characteristic parametric value includes at least one or more of the following: a maximum radio frequency processing bandwidth, a maximum radio frequency processing capability, a maximum channel bandwidth, a maximum baseband processing bandwidth, a maximum baseband processing capability, or a resource bandwidth specified by scheduling limitation; and/or the fourth capability includes that the terminal device supports a minimum bandwidth part BWP value being greater than or equal to a second characteristic parametric value of the terminal device, and the second characteristic parametric value includes at least one or more of the following: a bandwidth of a synchronization signal block, a bandwidth of a control resource set, or X resource blocks, where X is a positive integer greater than 1. The terminal device obtains a resource allocated by the network device, and the terminal device sends or receives information on the resource.

In a possible implementation, that the terminal device reports a fourth capability to a network device includes: The terminal device reports the fourth capability to the network device based on a sixth capability parameter.

Based on the foregoing technical solutions, in this application, a BWP size may be greater than the first characteristic parametric value of the terminal device, or the BWP size may be greater than or equal to the second characteristic parametric value of the terminal device. A bandwidth of the terminal device may be the maximum channel bandwidth of the terminal device, the maximum radio frequency channel bandwidth of the terminal device, the maximum baseband bandwidth of the terminal device, or the scheduling limitation for the terminal device. In other words, the BWP size is configured more flexibly, and may be applicable to different possible terminal device forms. In addition, the minimum BWP size of the terminal device may be greater than one resource block. Therefore, during indication, that the BWP is the resource block does not need to be indicated, thereby saving bits. For a specific channel, the minimum BWP size of the terminal device may be limited, to ensure receiving of the specific channel.

According to a fourth aspect, an information transmission method is provided. The method may be performed by a network device, or may be performed by a component (for example, a chip or a circuit) of the network device. This is not limited.

The method includes: The network device obtains a fourth capability of a terminal device. The fourth capability includes that the terminal device supports a bandwidth part BWP being greater than a first characteristic parametric value of the terminal device, and the first characteristic parametric value includes at least one or more of the following: a maximum radio frequency processing bandwidth, a maximum radio frequency processing capability, a maximum channel bandwidth, a maximum baseband processing bandwidth, a maximum baseband processing capability, or a resource bandwidth specified by scheduling limitation; and/or the fourth capability includes that the terminal device supports a minimum bandwidth part BWP value being greater than or equal to a second characteristic parametric value of the terminal device, and the second characteristic parametric value includes at least one or more of the following: a bandwidth of a synchronization signal block, a bandwidth of a control resource set, or X resource blocks, where X is a positive integer greater than 1. The network device indicates an allocated resource to the terminal device, and the network device receives or sends information on the resource.

In a possible implementation, that the network device obtains a fourth capability of a terminal device includes: The network device obtains the fourth capability of the terminal device based on a sixth capability parameter.

Based on the foregoing technical solutions, in this application, a BWP size may be greater than the first characteristic parametric value of the terminal device, or the BWP size may be greater than or equal to the second characteristic parametric value of the terminal device. A bandwidth of the terminal device may be the maximum channel bandwidth of the terminal device, the maximum radio frequency channel bandwidth of the terminal device, the maximum baseband bandwidth of the terminal device, or the scheduling limitation for the terminal device. In other words, the BWP size is configured more flexibly, and may be applicable to different possible terminal device forms. In addition, the minimum BWP size of the terminal device may be greater than one resource block. Therefore, during indication, that the BWP is the resource block does not need to be indicated, thereby saving bits. For a specific channel, the minimum BWP size of the terminal device may be limited, to ensure receiving of the specific channel.

According to a fifth aspect, an information transmission method is provided. The method may be performed by a terminal device, or may be performed by a component (for example, a chip or a circuit) of the terminal device. This is not limited.

The method includes: The terminal device determines an uplink bandwidth part BWP. The terminal device sends first uplink information in a first time unit via a resource inside the uplink BWP, and the terminal device sends second uplink information in a second time unit via a resource inside the uplink BWP. Frequency retuning exists between the first uplink information and the second uplink information sent by the terminal device, and guard time used for the frequency retuning is greater than or equal to first processing time. Alternatively, frequency retuning exists between the first uplink information and the second uplink information sent by the terminal device, and a time interval between an end moment at which the terminal device sends the first uplink information and a start moment at which the terminal device sends the second uplink information is greater than or equal to first processing time.

The method includes: The terminal device sends third uplink information in a third time unit, and the terminal device sends fourth uplink information in a fourth time unit. A BWP identifier ID used by the terminal device to send the third uplink information is the same as a BWP ID used by the terminal device to send the fourth uplink information, and at least one of resources used by the terminal device to send the fourth uplink information is outside a BWP used to send the third uplink information. Alternatively, a BWP ID used by the terminal device to send the third uplink information is different from a BWP ID used by the terminal device to send the fourth uplink information, and only center frequency channel numbers in BWP configurations associated with different BWP IDs are different. Frequency retuning exists between the third uplink information and the fourth uplink information sent by the terminal device, and guard time used for the frequency retuning is greater than or equal to second processing time. Alternatively, frequency retuning exists between the third uplink information and the fourth uplink information sent by the terminal device, and a time interval between an end moment at which the terminal device sends the third uplink information and a start moment at which the terminal device sends the fourth uplink information is greater than or equal to second processing time.

In a possible implementation, the first processing time and the second processing time are different; the first processing time and the second processing time are different types of processing time; or the first processing time is less than the second processing time.

According to the foregoing technical solutions, in this application, the terminal device may perform frequency retuning inside or outside the BWP, and cannot transmit the information when performing frequency retuning inside or outside the BWP. Performing frequency retuning inside the BWP requires shorter frequency retuning time (which may also be understood as that the first processing time is less than the second processing time, and the first processing time is also less than BWP switching time), so that duration of an information transmission interruption can be further reduced, an information transmission delay can be shortened, and information transmission performance can be improved. In addition, according to the method, the terminal device sends uplink information at different frequency channel numbers inside and outside the BWP in a spectrum retuning manner. The first processing time and/or the second processing time, and/or different time values are defined to enable terminals with different capabilities and terminals in different forms and different types to report whether the terminals support the processing time and the time values thereof, to implement the foregoing functions. This meets requirements of different terminals to a maximum extent. In a possible implementation, the first processing time, the second processing time, and a BWP switching delay are different; the first processing time, the second processing time, and the BWP switching delay are specified different processing time; or the first processing time is less than the second processing time, and the second processing time is less than the BWP switching delay.

In a possible implementation, the first uplink information and the second uplink information have a same channel type, and the first uplink information and the second uplink information are repetitions of a same uplink channel. Alternatively, the first uplink information and the second uplink information have a same channel type, and the first uplink information and the second uplink information are different parts of a same uplink channel. Alternatively, the first uplink information and the second uplink information have a same channel type, and the first uplink information and the second uplink information are different uplink information. Alternatively, the first uplink information and the second uplink information have different channel types.

In a possible implementation, the third uplink information and the fourth uplink information have a same channel type, and the third uplink information and the fourth uplink information are repetitions of a same uplink channel. Alternatively, the third uplink information and the fourth uplink information have a same channel type, and the third uplink information and the fourth uplink information are different parts of a same uplink channel. Alternatively, the third uplink information and the fourth uplink information have a same channel type, and the third uplink information and the fourth uplink information are different uplink information. Alternatively, the third uplink information and the fourth uplink information have different channel types.

According to a sixth aspect, an information transmission method is provided. The method may be performed by a network device, or may be performed by a component (for example, a chip or a circuit) of the network device. This is not limited.

The method includes: The network device allocates an uplink bandwidth part BWP to a terminal device. The network device receives first uplink information in a first time unit via a resource inside the uplink BWP, and the network device receives second uplink information in a second time unit via a resource inside the uplink BWP. Frequency retuning exists between the first uplink information and the second uplink information, and guard time used for the frequency retuning is greater than or equal to first processing time. Alternatively, frequency retuning exists between the first uplink information and the second uplink information, and a time interval between an end moment at which the network device receives the first uplink information from the terminal device and a start moment at which the network device receives the second uplink information from the terminal device is greater than or equal to first processing time.

The method includes: The network device receives third uplink information in a third time unit, and the network device receives fourth uplink information in a fourth time unit. A BWP identifier ID used by the network device to receive the third uplink information is the same as a BWP ID used by the network device to receive the fourth uplink information, and at least one of resources used by the network device to receive the fourth uplink information is outside a BWP used to receive the third uplink information. Alternatively, a BWP ID used by the network device to receive the third uplink information is different from a BWP ID used by the network device to receive the fourth uplink information, and only BWP center frequency channel numbers in BWP configurations associated with different BWP IDs are different. Frequency retuning occurs between the third uplink information and the fourth uplink information received by the network device, and guard time used for the frequency retuning is greater than or equal to second processing time. Alternatively, frequency retuning occurs between the third uplink information and the fourth uplink information received by the network device, and a time interval between an end moment at which the network device receives the third uplink information and a start moment at which the network device receives the fourth uplink information is greater than or equal to second processing time.

In a possible implementation, the first processing time and the second processing time are different; the first processing time and the second processing time are different types of processing time; or the first processing time is less than the second processing time.

According to the foregoing technical solutions, in this application, the network device may indicate that the terminal device may perform frequency retuning inside or outside the BWP, and cannot transmit the information when performing frequency retuning inside or outside the BWP. Performing frequency retuning inside the BWP requires shorter frequency retuning time (which may also be understood as that the first processing time is less than the second processing time, and the first processing time is also less than BWP switching time), so that duration of an information transmission interruption can be further reduced, an information transmission delay can be shortened, and information transmission performance can be improved. In addition, according to the method, the terminal device sends uplink information at different frequency channel numbers inside and outside the BWP in a spectrum retuning manner. The first processing time and/or the second processing time, and/or different time values are defined to enable terminals with different capabilities and terminals in different forms and different types to report whether the terminals support the processing time and the time values thereof, to implement the foregoing functions. This meets requirements of different terminals to a maximum extent.

In a possible implementation, the first processing time, the second processing time, and a BWP switching delay are different; the first processing time, the second processing time, and the BWP switching delay are specified different processing time; or the first processing time is less than the second processing time, and the second processing time is less than the BWP switching delay.

In a possible implementation, the first uplink information and the second uplink information have a same channel type, and the first uplink information and the second uplink information are repetitions of a same uplink channel. Alternatively, the first uplink information and the second uplink information have a same channel type, and the first uplink information and the second uplink information are different parts of a same uplink channel. Alternatively, the first uplink information and the second uplink information have a same channel type, and the first uplink information and the second uplink information are different uplink information. Alternatively, the first uplink information and the second uplink information have different channel types.

In a possible implementation, the third uplink information and the fourth uplink information have a same channel type, and the third uplink information and the fourth uplink information are repetitions of a same uplink channel. Alternatively, the third uplink information and the fourth uplink information have a same channel type, and the third uplink information and the fourth uplink information are different parts of a same uplink channel. Alternatively, the third uplink information and the fourth uplink information have a same channel type, and the third uplink information and the fourth uplink information are different uplink information. Alternatively, the third uplink information and the fourth uplink information have different channel types.

According to a seventh aspect, an information transmission method is provided. The method may be performed by a terminal device, or may be performed by a component (for example, a chip or a circuit) of the terminal device. This is not limited.

The method includes: The terminal device determines a downlink bandwidth part BWP. The terminal device receives first downlink information in a fifth time unit via a resource inside the downlink BWP, and the terminal device receives second downlink information in a sixth time unit via a resource inside the downlink BWP. Frequency retuning exists between the first downlink information and the second downlink information received by the terminal device, and guard time used for the frequency retuning is greater than or equal to third processing time. Alternatively, frequency retuning exists between the first downlink information and the second downlink information received by the terminal device, and a time interval between an end moment at which the terminal device receives the first downlink information and a start moment at which the terminal device receives second uplink information is greater than or equal to third processing time.

The method includes: The terminal device receives third downlink information in a seventh time unit, and the terminal device receives fourth downlink information in an eighth time unit. A BWP identifier ID used by the terminal device to receive the third downlink information is the same as a BWP ID used by the terminal device to receive the fourth downlink information, and at least one of resources used by the terminal device to receive the fourth downlink information is outside a BWP used to receive the third downlink information. Alternatively, a BWP ID used by the terminal device to receive the third downlink information is different from a BWP ID used by the terminal device to receive the third downlink information, and only BWP center frequency channel numbers in BWP configurations associated with different BWP IDs are different. Frequency retuning exists between the third downlink information and the fourth downlink information received by the terminal device, and guard time used for the frequency retuning is greater than or equal to fourth processing time. Alternatively, frequency retuning exists between the third downlink information and the fourth downlink information received by the terminal device, and a time interval between an end moment at which the terminal device receives the third downlink information and a start moment at which the terminal device receives the fourth downlink information is greater than or equal to fourth processing time.

In a possible implementation, the third processing time and the fourth processing time are different; the third processing time and the fourth processing time are different types of processing time; or the third processing time is less than the fourth processing time.

According to the foregoing technical solutions, in this application, the terminal device may perform frequency retuning inside or outside the BWP, and cannot transmit the information when performing frequency retuning inside or outside the BWP. Performing frequency retuning inside the BWP requires shorter frequency retuning time (which may also be understood as that the first processing time is less than the second processing time, and the first processing time is also less than BWP switching time), so that duration of an information transmission interruption can be further reduced, an information transmission delay can be shortened, and information transmission performance can be improved. In addition, according to the method, the terminal device sends uplink information at different frequency channel numbers inside and outside the BWP in a spectrum retuning manner. The first processing time and/or the second processing time, and/or different time values are defined to enable terminals with different capabilities and terminals in different forms and different types to report whether the terminals support the processing time and the time values thereof, to implement the foregoing functions. This meets requirements of different terminals to a maximum extent.

In a possible implementation, the third processing time, the fourth processing time, and a BWP switching delay are different; the third processing time, the fourth processing time, and the BWP switching delay are specified different processing time; or the third processing time is less than the fourth processing time, and the third processing time is less than the BWP switching delay.

In a possible implementation, the first downlink information and the second downlink information have a same channel type, and the first downlink information and the second downlink information are repetitions of a same uplink channel. Alternatively, the first downlink information and the second downlink information have a same channel type, and the first downlink information and the second downlink information are different parts of a same downlink channel. Alternatively, the first downlink information and the second downlink information have a same channel type, and the first downlink information and the second downlink information are different uplink information. Alternatively, the first downlink information and the second downlink information have different channel types.

In a possible implementation, the third downlink information and the fourth downlink information have a same channel type, and the third downlink information and the fourth downlink information are repetitions of a same uplink channel. Alternatively, the third downlink information and the fourth downlink information have a same channel type, and the third downlink information and the fourth downlink information are different parts of a same uplink channel. Alternatively, the third downlink information and the fourth downlink information have a same channel type, and the third downlink information and the fourth downlink information are different uplink information. Alternatively, the third downlink information and the fourth downlink information have different channel types.

According to an eighth aspect, an information transmission method is provided. The method may be performed by a network device, or may be performed by a component (for example, a chip or a circuit) of the network device. This is not limited.

The method includes: The network device allocates a downlink bandwidth part BWP to a terminal device. The network device sends first downlink information in a fifth time unit via a resource inside the downlink BWP, and the network device sends second downlink information in a sixth time unit via a resource inside the downlink BWP. Frequency retuning exists between the first downlink information and the second downlink information sent by the network device, and guard time used for the frequency retuning is greater than or equal to third processing time. Alternatively, frequency retuning exists between the first downlink information and the second downlink information sent by the network device, and a time interval between an end moment at which the network device sends the first downlink information and a start moment at which the network device sends the second uplink information is greater than or equal to third processing time.

The method includes: The network device sends third downlink information in a seventh time unit, and the network device sends fourth downlink information in an eighth time unit. A BWP identifier ID used by the network device to send the third downlink information is the same as a BWP ID used by the network device to send the fourth downlink information, and at least one of resources used by the network device to send the fourth downlink information is outside a BWP used to send the third downlink information. Alternatively, a BWP ID used by the network device to send the third downlink information is different from a BWP ID used by the network device to send the fourth downlink information, and only BWP center frequency channel numbers in BWP configurations associated with different BWP IDs are different. Frequency retuning occurs between the third downlink information and the fourth downlink information sent by the network device, and guard time used for the frequency retuning is greater than or equal to fourth processing time. Alternatively, frequency retuning occurs between the third downlink information and the fourth downlink information sent by the network device, and a time interval between an end moment at which the network device sends the third downlink information and a start moment at which the network device sends the fourth downlink information is greater than or equal to fourth processing time.

In a possible implementation, the third processing time and the fourth processing time are different; the third processing time and the fourth processing time are different types of processing time; or the third processing time is less than the fourth processing time.

According to the foregoing technical solutions, in this application, the network device may indicate that the terminal device may perform frequency retuning inside or outside the BWP, and cannot transmit the information when performing frequency retuning inside or outside the BWP. Performing frequency retuning inside the BWP requires shorter frequency retuning time (which may also be understood as that the first processing time is less than the second processing time, and the first processing time is also less than BWP switching time), so that duration of an information transmission interruption can be further reduced, an information transmission delay can be shortened, and information transmission performance can be improved. In addition, according to the method, the terminal device sends uplink information at different frequency channel numbers inside and outside the BWP in a spectrum retuning manner. The first processing time and/or the second processing time, and/or different time values are defined to enable terminals with different capabilities and terminals in different forms and different types to report whether the terminals support the processing time and the time values thereof, to implement the foregoing functions. This meets requirements of different terminals to a maximum extent.

In a possible implementation, the third processing time, the fourth processing time, and a BWP switching delay are different; the third processing time, the fourth processing time, and the BWP switching delay are specified different processing time; or the third processing time is less than the fourth processing time, and the third processing time is less than the BWP switching delay.

In a possible implementation, the first downlink information and the second downlink information have a same channel type, and the first downlink information and the second downlink information are repetitions of a same uplink channel. Alternatively, the first downlink information and the second downlink information have a same channel type, and the first downlink information and the second downlink information are different parts of a same downlink channel. Alternatively, the first downlink information and the second downlink information have a same channel type, and the first downlink information and the second downlink information are different uplink information. Alternatively, the first downlink information and the second downlink information have different channel types.

According to a ninth aspect, an information transmission method is provided. The method may be performed by a terminal device, or may be performed by a component (for example, a chip or a circuit) of the terminal device. This is not limited.

The method includes: The terminal device reports a seventh capability parameter to a network device. The seventh capability parameter indicates a fifth capability in each of one or more sets, and the fifth capability includes at least one or more of the following used by the terminal device to transmit a channel or signal in each set: a maximum radio frequency processing bandwidth, a maximum radio frequency processing capability, a maximum channel bandwidth, a maximum baseband processing bandwidth, a maximum baseband processing capability, or scheduling limitation. Each set includes at least one channel or signal, the terminal device obtains a resource allocated by the network device, and the terminal device sends or receives information on the resource.

According to the foregoing technical solutions, in this application, channels or signals may be grouped into one or more sets, and the terminal device may report, in a set manner, a maximum resource for transmitting the channel or signal in each of the one or more sets. The channel or signal in the set in this application is not limited to a data channel, and a control channel and a measurement channel/signal are also included.

In addition, in the set reporting manner, reporting frequency of the terminal device can be reduced, bit overheads during reporting of the terminal device can be reduced, a reporting delay can be reduced, and costs of the terminal device may be further reduced. In addition, according to the method, baseband processing capabilities and radio frequency processing capabilities may be defined based on a combination of different channels or signals, so that the terminal device can implement different baseband capabilities and radio frequency capabilities in a more refined manner. This provides more precise control and compromise for terminal device costs, implementation complexity, compatibility, application scenarios, actual deployment, and commercial application.

According to a tenth aspect, an information transmission method is provided. The method may be performed by a network device, or may be performed by a component (for example, a chip or a circuit) of the network device. This is not limited.

The method includes: The network device receives a seventh capability parameter of a terminal device. The seventh capability parameter indicates a fifth capability in each of one or more sets, and the fifth capability includes at least one or more of the following used by the terminal device to transmit a channel or signal in each set: a maximum radio frequency processing bandwidth, a maximum radio frequency processing capability, a maximum channel bandwidth, a maximum baseband processing bandwidth, a maximum baseband processing capability, or scheduling limitation. Each set includes at least one channel or signal, the network device indicates an allocated resource to the terminal device, and the network device receives or sends information on the resource.

According to the foregoing technical solutions, in this application, channels or signals may be grouped into one or more sets, and the terminal device may report, in a set manner, a maximum resource for transmitting the channel or signal in each of the one or more sets. The channel or signal in the set in this application is not limited to a data channel, and a control channel and a measurement channel/signal are also included.

In addition, in the set reporting manner, reporting frequency of the terminal device can be reduced, bit overheads during reporting of the terminal device can be reduced, a reporting delay can be reduced, and costs of the terminal device may be further reduced. In addition, according to the method, baseband processing capabilities and radio frequency processing capabilities may be defined based on a combination of different channels or signals, so that the terminal device can implement different baseband capabilities and radio frequency capabilities in a more refined manner. This provides more precise control and compromise for terminal device costs, implementation complexity, compatibility, application scenarios, actual deployment, and commercial application.

According to an eleventh aspect, an information transmission apparatus is provided. For beneficial effect, refer to descriptions of the first aspect, the third aspect, the fifth aspect, the seventh aspect, and the ninth aspect. Details are not described herein again. The communication apparatus has functions of implementing behavior in the method examples in the first aspect, the third aspect, the fifth aspect, the seventh aspect, and the ninth aspect. The functions may be implemented by hardware, or may be implemented by hardware executing corresponding software. The hardware or the software includes one or more units/modules corresponding to the foregoing functions. In a possible design, the communication apparatus includes a transceiver unit and a processing unit. These modules may perform corresponding functions in the method examples in the first aspect, the third aspect, the fifth aspect, the seventh aspect, and the ninth aspect. For details, refer to detailed descriptions in the method examples. Details are not described herein again.

According to a twelfth aspect, an information transmission apparatus is provided. For beneficial effect, refer to descriptions of the second aspect, the fourth aspect, the sixth aspect, the eighth aspect, and the tenth aspect. Details are not described herein again. The communication apparatus has functions of implementing behavior in the method examples in the second aspect, the fourth aspect, the sixth aspect, the eighth aspect, and the tenth aspect. The functions may be implemented by hardware, or may be implemented by hardware executing corresponding software. The hardware or the software includes one or more units/modules corresponding to the foregoing functions. In a possible design, the communication apparatus includes a transceiver unit and a processing unit. These modules may perform corresponding functions in the method examples in the second aspect, the fourth aspect, the sixth aspect, the eighth aspect, and the tenth aspect. For details, refer to detailed descriptions in the method examples. Details are not described herein again.

According to a thirteenth aspect, an information transmission apparatus is provided. The communication apparatus may be the terminal device in the foregoing method embodiments, or may be a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a fourteenth aspect, an information transmission apparatus is provided. The communication apparatus may be the network device in the foregoing method embodiments, or may be a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to a fifteenth aspect, a computer program product is provided. The computer program product includes computer program code. When the computer program code is run, the methods performed by the terminal device in the foregoing aspects are performed.

According to a sixteenth aspect, a computer program product is provided. The computer program product includes computer program code. When the computer program code is run, the methods performed by the network device in the foregoing aspects are performed.

According to a seventeenth aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete component.

According to an eighteenth aspect, this application provides a chip system. The chip system includes a processor, configured to implement functions of the network device in the methods in the foregoing aspects. In a possible design, the chip system further includes a memory, configured to store program instructions and/or data. The chip system may include a chip, or may include a chip and another discrete component.

According to a nineteenth aspect, this application provides a computer-readable storage medium. The computer-readable storage medium stores a computer program. When the computer program is run, the methods performed by the terminal device in the foregoing aspects are implemented.

According to a twentieth aspect, this application provides a computer-readable storage medium. The computer-readable storage medium stores a computer program. When the computer program is run, the methods performed by the network device in the foregoing aspects are implemented.

### BRIEF DESCRIPTION OF DRAWINGS

FIG. 1 is a diagram of an architecture of a communication system to which an embodiment of this application is applied;
FIG. 2 is a schematic flowchart of an information transmission method 200 according to this application;
FIG. 3 is a schematic flowchart of an information transmission method 300 according to this application;
FIG. 4 is a schematic flowchart of an information transmission method 400 according to this application;
FIG. 5 is a block diagram of an information transmission apparatus 100 according to this application; and
FIG. 6 is a block diagram of an information transmission apparatus 200 according to this application.

### DESCRIPTION OF EMBODIMENTS

The following describes technical solutions of embodiments in this application with reference to accompanying drawings.

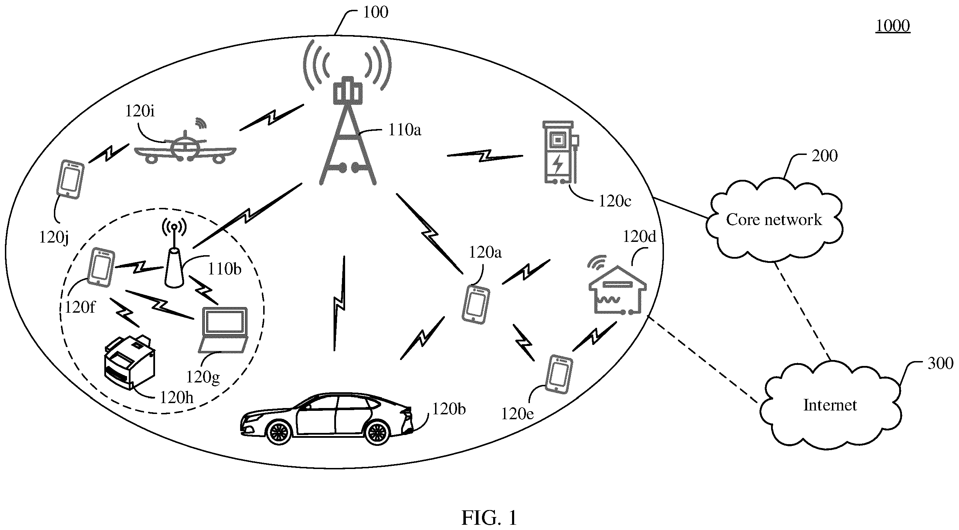

FIG. 1 is a diagram of an architecture of a communication system 1000 to which an embodiment of this application is applied. As shown in FIG. 1, the communication system includes a network device 100 and a core network 200. Optionally, the communication system 1000 may further include an Internet 300. The network device 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and the radio access network device may be different independent physical devices, functions of the core network device and logical functions of the radio access network device may be integrated into a same physical device, or some functions of the core network device and some functions of the radio access network device may be integrated into one physical device. Terminal devices may be connected to each other in the wired or wireless manner, and radio access network devices may be connected to each other in the wired or wireless manner. FIG. 1 is only a diagram. The communication system may further include another network device, for example, may further include a wireless relay device and a wireless backhaul device, which are not shown in FIG. 1.

The network device in this application may be a radio access network device. For example, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes a part of functions of the base station, for example, may be a central unit (central unit, CU), or may be a distributed unit (distributed unit, DU). The CU herein completes functions of a radio resource control protocol layer and a packet data convergence protocol layer of the base station, and may further complete functions of a service data adaptation protocol (service data adaptation protocol, SDAP) layer. The DU completes functions of a radio link control layer and a medium access control layer of the base station, and may further complete some or all functions of a physical layer. For specific descriptions of the foregoing protocol layers, refer to related technical specifications in 3GPP. The radio access network device may be a macro base station (for example, 110a in FIG. 1), or may be a micro base station or an indoor base station (for example, 110b in FIG. 1), or may be a relay node or a donor node, or may be a terminal device. A specific technology and a specific device form that are used by the radio access network device are not limited in embodiments of this application. For ease of description, the following provides descriptions by using an example in which the radio access network device is a base station.

The terminal device may be described as UE, a mobile station, a mobile terminal, or the like. The terminal device may be widely used in various scenarios, for example, a device-to-device (device-to-device, D2D) scenario, a vehicle-to-everything (vehicle-to-everything, V2X) communication scenario, a machine type communication (machine type communication, MTC) scenario, an Internet of things (Internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless sending and receiving function, a wearable device, a vehicle, an airplane, a ship, a robot, a robotic arm, a smart home device, or the like. A specific technology and a specific device form that are used by the terminal are not limited in embodiments of this application.

The terminal device in this application may be, for example, reduced capability user equipment (reduced capability user equipment, RedCap UE) or low complexity user equipment, or may be extended to conventional UE. For example, existing energy-saving UE whose bandwidth part (bandwidth part, BWP) is narrow may also be used. Specifically, the terminal device in this application may be a type-A terminal device or a type-B terminal device. The type-A terminal device and the type-B terminal device may have at least one of the following distinguishing features:
1. Bandwidth capabilities are different. For example, a bandwidth supported by the type-A terminal device is less than a bandwidth supported by the type-B terminal device.
2. Transceiver antenna quantities are different. For example, a transceiver antenna quantity supported by the type-A terminal device is less than a transceiver antenna quantity supported by the type-B terminal device.
3. Maximum uplink transmit power is different. For example, maximum uplink transmit power supported by the type-A terminal device is less than maximum uplink transmit power supported by the type-B terminal device.
4. Protocol versions are different. For example, the type-A terminal device may be a terminal device in the NR release 17 (release 17, Rel-17) or a release later than the NR Rel-17. For example, the type-B terminal device may be a terminal device in the NR release 15 (release 15, Rel-15) or the NR release 16 (release 16, Rel-16). The type-B terminal device may also be referred to as an NR legacy (NR legacy) terminal device.
5. Data processing capabilities are different. For example, a minimum delay between receiving downlink data by the type-A terminal device and sending a feedback for the downlink data by the type-A terminal device is greater than a minimum delay between receiving downlink data by the type-B terminal device and sending a feedback for the downlink data by the type-B terminal device, and/or a minimum delay between sending uplink data by the type-A terminal device and receiving a feedback for the uplink data by the type-A terminal device is greater than a minimum delay between sending uplink data by the type-B terminal device and receiving a feedback for the uplink data by the type-B terminal device.

In a possible implementation, the type-A terminal device may be a reduced capability RedCap terminal device, or the type-A terminal device may be a reduced capability terminal device, a reduced capability terminal device, RedCap UE, reduced capacity UE, narrowband NR (narrowband NR, NB-NR) UE, energy-saving UE, or the like. The type-B terminal device may be a terminal device with a legacy capability, a normal capability, or a high capability, or may be referred to as a legacy (legacy) terminal device or a normal (normal) terminal device. The type-B terminal device and the type-A terminal device have but are not limited to the distinguishing features.

Roles of the radio access network device and the terminal may be relative. For example, a helicopter or an uncrewed aerial vehicle 120i in FIG. 1 may be configured as a mobile radio access network device (for example, a base station). For a terminal 120j that accesses the network device 100 via 120i, the terminal 120i is a radio access network device. However, for a radio access network device 110a, 120i is a terminal. In other words, 110a and 120i communicate with each other according to a radio air interface protocol. Certainly, 110a and 120i may alternatively communicate with each other according to an interface protocol between radio access network devices. In this case, 120i is also a radio access network device relative to 110a. Therefore, both the radio access network device and the terminal may be collectively referred to as communication apparatuses, 110a and 110b in FIG. 1 may be referred to as communication apparatuses having a function of the radio access network device, and 120a to 120j in FIG. 1 may be referred to as communication apparatuses having a function of the terminal.

The radio access network device and the terminal may be at fixed locations, or may be movable. The radio access network device and the terminal may be deployed on land, including an indoor or outdoor device, or a handheld or vehicle-mounted device; may be deployed on water; or may be deployed on an airplane, a balloon, and an artificial satellite. Application scenarios of the radio access network device and the terminal are not limited in embodiments of this application.

Communication between the radio access network device and the terminal device and communication between terminal devices may be performed via a licensed spectrum (licensed spectrum), may be performed via an unlicensed spectrum (unlicensed spectrum), or may be performed via both a licensed spectrum and an unlicensed spectrum. Communication between the radio access network device and the terminal device and communication between terminal devices may be performed via a spectrum below 6G, or may be performed via a spectrum above 6G, or may be performed via both a spectrum below 6G and a spectrum above 6G. Spectrum resources used by the radio access network device and the terminal device are not limited in embodiments of this application.

In this application, the terminal device is connected to the radio access network device in the wireless manner, and the radio access network device is connected to the core network device in the wireless or wired manner. The core network device and the radio access network device may be different independent physical devices, the functions of the core network device and the logical functions of the radio access network device may be integrated into the same physical device, or the some functions of the core network device and the some functions of the radio access network device may be integrated into the physical device. The terminal device may be located at a fixed location, or may be movable. FIG. 1 is only the diagram. The communication system may further include the another network device, for example, may further include the wireless relay device and the wireless backhaul device, which are not shown in FIG. 1. Quantities of core network devices, radio access network devices, and terminal devices included in the mobile communication system are not limited in embodiments of this application.

A maximum radio frequency processing bandwidth of the terminal device and a maximum baseband processing bandwidth of the terminal device match a maximum channel bandwidth of the terminal device. A first form of the terminal device is: The maximum channel bandwidth of the terminal device remains at 20 MHz (which may also be understood as that both the maximum radio frequency processing bandwidth and the maximum baseband processing bandwidth of the terminal device are 20 MHz in this case), and a peak rate of the terminal device during physical downlink data channel (physical downlink shared channel, PDSCH) transmission and/or physical uplink data channel (physical uplink shared channel, PUSCH) transmission is reduced, for example, the peak rate of the terminal device is reduced by limiting a maximum quantity of resource blocks used for the PDSCH transmission and/or the PUSCH transmission. A second form of the terminal device is: The maximum radio frequency processing bandwidth of the terminal device is 20 MHz, and the maximum baseband processing bandwidth of the terminal device is 5 MHz. A third form of the terminal device is: The maximum channel bandwidth of the terminal device is 5 MHz (which may also be understood as that both the maximum radio frequency processing bandwidth and the maximum baseband processing bandwidth of the terminal device are 5 MHz in this case).

In other words, the maximum radio frequency processing bandwidth and the maximum baseband processing bandwidth of the terminal device may be different. For example, the maximum radio frequency processing bandwidth of the terminal device is 20 MHz, and the maximum baseband processing bandwidth of the terminal device may be 5 MHz. Therefore, when the maximum radio frequency processing bandwidth and the maximum baseband processing bandwidth of the terminal device are different, different capabilities of the terminal device are reported. To be specific, implementing that the terminal device reports the maximum radio frequency processing bandwidth and the maximum baseband processing bandwidth that are different becomes a technical problem that needs to be resolved. Therefore, this application provides an information transmission method and apparatus, so that the terminal device can independently report the maximum radio frequency processing bandwidth and the maximum baseband processing bandwidth. This implements decoupled reporting of the maximum radio frequency processing bandwidth and/or the maximum baseband bandwidth that are/is the same or different.

The following technical solutions of this application may be applicable to downlink signal transmission, uplink signal transmission, V2X signal transmission, or D2D signal transmission. For the downlink signal transmission, a sending device is a radio access network device, and correspondingly a receiving device is a terminal device. For the uplink signal transmission, a sending device is a terminal device, and correspondingly a receiving device is a radio access network device. For the V2X signal transmission, a sending device is a terminal device, and correspondingly a receiving device may be a terminal device or a radio access network device. For the D2D signal transmission, a sending device is a terminal device, and correspondingly a receiving device is also a terminal device.

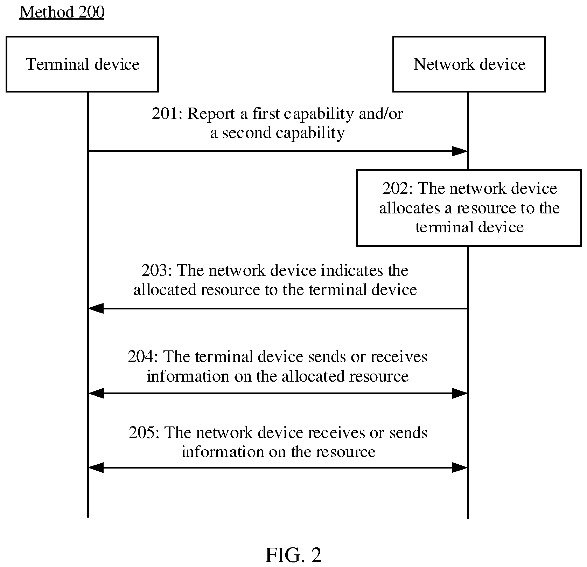

FIG. 2 is a block diagram of an information transmission method 200 according to this application. FIG. 2 is a schematic flowchart of the information transmission method according to an embodiment of this application. In a procedure shown in FIG. 2, a terminal device may be a RedCap terminal device or a terminal device in an NR system. The method includes the following steps.

Step 201: The terminal device reports a first capability and/or a second capability to a network device. Correspondingly, the network device obtains the first capability and/or the second capability of the terminal device.

In this application, for example, the first capability and/or the second capability may be collectively referred to as capabilities/a capability of the terminal device. For example, the capability of the terminal device may include at least one or more of the following: a maximum radio frequency processing bandwidth supported by the terminal device, a maximum radio frequency processing capability supported by the terminal device, a maximum channel bandwidth supported by the terminal device, that the terminal device supports information transmission on N_{RB} resource blocks, that the terminal device supports a bandwidth decrease, that the terminal device does not support a bandwidth decrease, a maximum baseband processing bandwidth supported by the terminal device, a maximum baseband processing capability supported by the terminal device, that the terminal device supports information transmission on M_{RB} resource blocks, a maximum transport block (transport block, TB) size supported by the terminal device, a maximum modulation and coding scheme (modulation and coding scheme, MCS) index supported by the terminal device, a scaling factor (scaling factor) (which may be understood as a value or an element set of the scaling factor), that the terminal device supports scheduling limitation, or that the terminal device does not support scheduling limitation.

The "maximum radio frequency processing bandwidth" may be understood as a maximum radio frequency bandwidth, or may be understood as a maximum radio frequency channel bandwidth.

The "maximum radio frequency processing capability" may be understood as a maximum operating frequency range of a radio frequency.

The "information transmission on N_{RB} resource blocks" may be understood as a configuration of a maximum transmission bandwidth. For example, the N_{RB} resource blocks are the configuration of the transmission bandwidth. N_{RB} may also be understood as a maximum value of a resource block quantity that is supported by the terminal device and that is required for the information transmission. For example, the N_{RB} resource blocks are related to the maximum channel bandwidth and/or a subcarrier spacing of the terminal device. For another example, the N_{RB} resource blocks are related to a channel bandwidth and/or a subcarrier spacing of the terminal device. For another example, the N_{RB} resource blocks are related to a bandwidth and/or a subcarrier spacing of the terminal device. N_{RB} is an integer greater than 0.

The "bandwidth decrease" may be understood as a decrease in the maximum channel bandwidth, a decrease in a maximum bandwidth, a decrease in the maximum radio frequency channel bandwidth, a decrease in a maximum baseband channel bandwidth, a decrease in the maximum radio frequency bandwidth, or a decrease in a maximum baseband bandwidth.

The "scheduling limitation" may be understood as limiting at least one or more of the following: a bandwidth, a resource block, a resource element, a carrier, a resource block group, a resource element group, a subband, a frequency range, a frequency band, a subcarrier spacing, a modulation and coding scheme index, or a transport block size.

The "maximum baseband processing bandwidth" may be understood as the maximum baseband bandwidth or the maximum baseband channel bandwidth.

The "maximum baseband processing capability" may be understood as a maximum operating frequency range of a baseband.

For understanding of "supporting information transmission on M_{RB} resource blocks", refer to the foregoing "supporting information transmission on N_{RB} resource blocks". A value of M_{RB} may be less than a value of N_{RB}. For example, the value of M_{RB} may alternatively be equal to the value of N_{RB}. Optionally, the value of M_{RB} may alternatively be greater than the value of NRB.

For example, the capability of the terminal device may be in a form of a set. For example, a set #A may include at least one or more of the following: the maximum radio frequency processing bandwidth supported by the terminal device, the maximum radio frequency processing capability supported by the terminal device, the maximum channel bandwidth supported by the terminal device, that the terminal device supports information transmission on the N_{RB} resource blocks, that the terminal device supports the bandwidth decrease, that the terminal device does not support the bandwidth decrease, the maximum baseband processing bandwidth supported by the terminal device, the maximum baseband processing capability supported by the terminal device, that the terminal device supports information transmission on the M_{RB} resource blocks, the maximum transport block size supported by the terminal device, the maximum modulation and coding scheme index supported by the terminal device, the scaling factor, that the terminal device supports the scheduling limitation, or that the terminal device does not support the scheduling limitation.

In a possible implementation, the terminal device reports ("reports" may also be understood as "indicates", and details are not described below) the capability of the terminal device to a communication peer device based on one or more capability parameters. The communication peer device may be a network device, a vehicle, a terminal device, everything, or a device.

In this application, for example, a capability that is reported based on an n^{th} capability parameter of the terminal device and that is of the terminal device may include at least one or more of the following: the maximum radio frequency processing bandwidth supported by the terminal device, the maximum radio frequency processing capability supported by the terminal device, the maximum channel bandwidth supported by the terminal device, that the terminal device supports information transmission on the N_{RB} resource blocks, that the terminal supports the bandwidth decrease, that the terminal does not supports the bandwidth decrease, the maximum baseband processing bandwidth supported by the terminal device, the maximum baseband processing capability supported by the terminal device, that the terminal device supports information transmission on the M_{RB} resource blocks, the maximum transport block size supported by the terminal device, the maximum modulation and coding scheme index supported by the terminal device, the scaling factor, that the terminal device supports the scheduling limitation, or that the terminal device does not support the scheduling limitation, where n is a positive integer.

In a possible implementation, the terminal device may determine a capability set (for example, determine the set #A) that is indicated by the n^{th} capability parameter and that is of the terminal device, and report the capability of the terminal device to the communication peer device based on the n^{th} capability parameter.

In this application, for example, the first capability may include at least one or more of the following: the maximum radio frequency processing bandwidth supported by the terminal device, the maximum radio frequency processing capability supported by the terminal device, the maximum channel bandwidth supported by the terminal device, that the terminal device supports information transmission on the N_{RB} resource blocks, that the terminal device supports the bandwidth decrease, or that the terminal device supports the scheduling limitation, where N_{RB} is an integer greater than 0. For example, the second capability may include at least one or more of the following: the maximum baseband processing bandwidth supported by the terminal device, the maximum baseband processing capability supported by the terminal device, that the terminal device supports information transmission on the M_{RB} resource blocks, that the terminal device does not support the bandwidth decrease, the maximum transport block size supported by the terminal device, the maximum modulation and coding scheme index supported by the terminal device, the scaling factor, or that the terminal device does not support the scheduling limitation, where M_{RB} is an integer greater than 0.

In another example, the first capability may be the maximum channel bandwidth supported by the terminal device, and the second capability may be one or more of that the terminal device supports information transmission on the M_{RB} resource blocks, the maximum transport block size supported by the terminal device, the maximum modulation and coding scheme index supported by the terminal device, or the scaling factor.

In this application, the first capability may be in the form of a set. For example, the set #A may include one or more of the following: the maximum radio frequency processing bandwidth supported by the terminal device, the maximum radio frequency processing capability supported by the terminal device, the maximum channel bandwidth supported by the terminal device, that the terminal device supports information transmission on the N_{RB} resource blocks, that the terminal device supports the bandwidth decrease, or that the terminal device supports the scheduling limitation. Similarly, the second capability may also be in the form of a set. For example, a set #B may include one or more of the following: the maximum baseband processing bandwidth supported by the terminal device, the maximum baseband processing capability supported by the terminal device, that the terminal device supports information transmission on the M_{RB} resource blocks, that the terminal device does not support the bandwidth decrease, the maximum transport block size supported by the terminal device, the maximum modulation and coding scheme index supported by the terminal device, the scaling factor, or that the terminal device does not support the scheduling limitation.

For example, the terminal device may report the first capability to the network device based on a first capability parameter, and/or the terminal device may report the second capability to the network device based on a second capability parameter. For another example, the terminal device may report the first capability or the second capability to the network device based on a third capability parameter. For still another example, the terminal device may report the first capability and the second capability to the network device based on a fourth capability parameter.

In this application, the terminal device may report the first capability and/or the second capability by using different methods, as shown in Table 1 below. For example, in a method 1, the terminal device reports the first capability to the network device based on the first capability parameter, and the terminal device reports the second capability to the network device based on the second capability parameter. In a method 2, the terminal device reports the first capability to the network device based on the first capability parameter, where the network device pre-specifies (which may also be understood as "predefines", and details are not described below) the second capability of the terminal device. In a method 3, the terminal device reports the second capability to the network device based on the second capability parameter, and the network device pre-specifies the first capability of the terminal device. In a method 4, the terminal device reports the first capability to the network device based on the third capability parameter, or the terminal device reports the second capability to the network device based on the third capability parameter. In a method 5, the terminal device reports the first capability to the network device based on the fourth capability parameter, and the terminal device reports the second capability to the network device based on the fourth capability parameter.

**Table 1 Methods for reporting the capability by the terminal device**

| Method | First capability | Second capability |
|---|---|---|
| 1 | Indicated by the first capability parameter | Indicated by the second capability parameter |
| 2 | Indicated by the first capability parameter | Pre-specified |
| 3 | Pre-specified | Indicated by the second capability parameter |
| 4 | Indicated by the third capability parameter | Indicated by the third capability parameter |
| 5 | Fourth capability parameter | Indicated by the fourth capability parameter |

For example, the maximum channel bandwidth of the terminal device may be pre-specified, or the value of N_{RB} may be pre-specified. For another example, one or more of the following element sets may be pre-specified: the value of M_{RB}, a pre-specified transport block size, a pre-specified maximum modulation and coding scheme index, and a pre-specified value of the scaling factor or a pre-specified scaling factor.

In this application, the first capability parameter and the second capability parameter are different capability parameters. For example, the first capability parameter indicates the first capability, and the second capability parameter indicates the second capability.

It should be noted that the first capability is pre-specified, and the second capability is reported by the terminal device to the network device based on the second capability parameter. Alternatively, the first capability is reported to the network device based on the first capability parameter, and the second capability is pre-specified. In this case, for some terminal devices, first capabilities of the terminal devices may not be less than the second capability. In this case, for some other terminal devices, first capabilities of the terminal devices are less than the second capability.

Step 202: The network device allocates a resource to the terminal device.

In an implementation, the network device may allocate the resource to the terminal device based on the first capability and/or the second capability reported by the terminal device to the network device. For example, the first capability reported by the terminal device is 20 MHz, namely, the maximum radio frequency processing bandwidth supported by the terminal device, and the second capability reported by the terminal device is 5 MHz, namely, the maximum baseband processing bandwidth supported by the terminal device. The maximum radio frequency processing bandwidth allocated by the network device to the terminal device may be 20 MHz, or may be less than 20 MHz; and the maximum baseband processing bandwidth configured by the network device for the terminal device may be 5 MHz, or may be less than 5 MHz. For example, the network device may alternatively allocate a time domain resource based on the capability reported by the terminal device.

In another implementation, the network device may not allocate the resource to the terminal device based on the first capability and/or the second capability reported by the terminal device to the network device. In other words, the network device may allocate the resource to the terminal device based on a current channel status, a network load status, a historical resource allocation status of the terminal device, and/or the like. For example, the network device may allocate the resource to the terminal device without referring to any condition.

In this application, the "resource" may be a frequency domain resource, a time domain resource, a resource block (resource block, RB), a physical resource block (physical resource block, PRB), or the like. This is not limited in this application.

Step 203: The network device indicates the allocated resource to the terminal device. Correspondingly, the terminal device obtains the resource allocated by the network device.

Step 204: The terminal device sends or receives information on the allocated resource.

For example, the terminal device may send uplink information on the allocated resource. For another example, the terminal device may receive downlink information on the allocated resource. Information transmitted in this application may be, for example, control information, data information, a channel, or a signal. This is not limited in this application.

Step 205: The network device receives or sends information on the resource.

For example, the network device may also send uplink information on the resource. For another example, the network device may also receive downlink information on the resource.

It may also be understood that the terminal device and the network device may perform information transmission on the resource.

Step 201 and step 202 are not subject to an execution sequence, and step 204 and step 205 are not subject to an execution sequence.

According to the foregoing technical solutions, in this application, the terminal device can independently report the maximum radio frequency processing bandwidth and the maximum baseband processing bandwidth, to implement decoupled reporting of maximum channel bandwidths and/or maximum processing bandwidths of the radio frequency and the baseband. A reporting manner of the terminal device can be more flexible. The maximum radio frequency processing bandwidth and the maximum baseband processing bandwidth of the terminal device may be the same, or may be different. In other words, there may be different forms or different types of terminal devices. According to the solutions in this application, flexible reporting manners can be provided for the terminal devices in different forms or different types to report capabilities. For example, the maximum radio frequency processing bandwidth and the maximum baseband processing bandwidth of the terminal device are different. If decoupled reporting of the maximum radio frequency processing bandwidth and the maximum baseband processing bandwidth cannot be implemented, when allocating the resource used for the information transmission, the network device may consider only the maximum radio frequency processing bandwidth, and the allocated resource may exceed a maximum baseband processing bandwidth capability supported by the terminal device. When the information is transmitted from the radio frequency to the baseband, the baseband cannot ensure that the information can be correctly received. According to the technical method in this application, when allocating the resource used for the information transmission, the network device can consider both the maximum radio frequency processing bandwidth and the maximum baseband processing bandwidth, to ensure proper resource allocation or resource scheduling, thereby improving data transmission performance of the terminal device. In addition, different factors such as costs, implementation complexity (storage and computing resources), processing delays, compatibility, scenarios, deployment scenarios, and commercial application are considered. The terminal devices in different forms or different types have different requirements on baseband capabilities (like bandwidths) or radio frequency capabilities (like bandwidths). In the foregoing capability reporting manner, compromise and adaptation can be implemented on the foregoing factors to a maximum extent.

In an example, the first capability may be the maximum radio frequency processing bandwidth supported by the terminal device or the maximum radio frequency processing capability supported by the terminal device. The second capability may be the maximum baseband processing bandwidth supported by the terminal device or the maximum baseband processing capability supported by the terminal device.

In a possible implementation, the terminal device may report the first capability based on the first capability parameter. For example, the first capability may be in the form of a set. A first capability set that is indicated by the first capability parameter and that is of the terminal device may include at least (20 MHz, 5 MHz). For another example, a first capability set that is indicated by the first capability parameter and that is of the terminal device may include at least (20 MHz, 10 MHz, 5 MHz). The terminal device may report the second capability based on the second capability parameter. For example, the second capability may be in the form of a set. A second capability set that is indicated by the second capability parameter and that is of the terminal device may include at least (20 MHz, 5 MHz). For another example, a second capability set that is indicated by the second capability parameter and that is of the terminal device includes at least (20 MHz, 10 MHz, 5 MHz). In other words, in this application, the terminal device may separately report the supported maximum radio frequency processing bandwidth and the supported maximum baseband processing bandwidth based on the first capability parameter and the second capability parameter.

For example, a terminal device #A may report that the supported maximum radio frequency processing bandwidth is 20 MHz, and the supported maximum baseband processing bandwidth is 5 MHz. For another example, a terminal device #B may report that the supported maximum radio frequency processing bandwidth is 20 MHz, and the supported maximum baseband processing bandwidth is 20 MHz. For still another example, a terminal device #C may report that the supported maximum radio frequency processing bandwidth is 5 MHz, and the supported maximum baseband processing bandwidth is 5 MHz.

In another possible implementation, for example, the first capability parameter does not appear or is not transmitted, and it may indicate that the first capability of the terminal device is A MHz. For another example, the first capability parameter appears or is transmitted, and it may indicate that the first capability of the terminal device is B MHz. A and B may be positive integers, where for example, A=20 and B=5. For example, the second capability parameter does not appear or is not transmitted, indicating that the second capability of the terminal device is C MHz. For another example, the second capability parameter appears or is transmitted, indicating that the second capability of the terminal device is D MHz. C and D may be positive integers, where for example, C=20 and D=5.

It should be understood that a value of the first capability parameter of the terminal device, an element set of the first capability, or a set may be related to first information. A value of the second capability parameter of the terminal device, an element set of the second capability, or a set may also be related to the first information. The first information may include one or more of band information, subcarrier spacing (subcarrier spacing, SCS) information, modulation and coding policy information, load information, channel status information, an antenna quantity, product costs, or a hardware capability.

In another example, the first capability may be the maximum channel bandwidth supported by the terminal device. For example, the second capability is that the terminal device supports information transmission on the M_{RB} resource blocks, and M_{RB} may be an integer greater than 0.

In a possible implementation, the terminal device may report the first capability. For example, the first capability parameter may indicate the first capability via one bit state. For example, the bit state of the first capability parameter is 0, indicating that the maximum channel bandwidth supported by the terminal device is A MHz. A may be a positive integer, where for example, A=5. For another example, the bit state of the first capability parameter is 1, indicating that the maximum channel bandwidth supported by the terminal device is B MHz. B may be a positive integer, where for example, B=20.

In another possible implementation, the first capability does not need to be reported. For example, the first capability may be predefined. For example, the maximum channel bandwidth supported by the terminal device is predefined as 20 MHz.

In a possible implementation, the terminal device may report the second capability parameter. For example, the second capability parameter may directly or implicitly indicate the value of M_{RB} to the communication peer device.

For example, M_{RB} is an element in a value set, and the value set includes at least one or more of the following: first M_{RB}, second M_{RB}, third M_{RB}, fourth M_{RB}, fifth M_{RB}, sixth M_{RB}, seventh M_{RB}, or eighth M_{RB}. All elements in the value set are integers. For example, it may be predefined that the maximum channel bandwidth supported by the terminal device is 20 MHz, and the second capability parameter may be indicated by one bit state. For example, the bit state of the second capability parameter is 0, indicating that the terminal device supports information transmission on resource blocks whose quantity is the first M_{RB} value. For another example, the bit state of the second capability parameter is 1, indicating that the terminal device supports information transmission on resource blocks whose quantity is the second M_{RB} value. The first M_{RB} value and the second M_{RB} value may be different values.

For another example, the bit state of the second capability parameter is 0, indicating that the terminal device supports information transmission on resource blocks whose quantity is the third M_{RB} value. For another example, the bit state of the second capability parameter is 1, indicating that the terminal device supports information transmission on resource blocks whose quantity is the fourth M_{RB} value. For example, the resource blocks whose quantity is the third M_{RB} value are a quantity of resource blocks included in the 20 MHz maximum channel bandwidth of the terminal device. For another example, the resource blocks whose quantity is the fourth M_{RB} value are a quantity of resource blocks included in the 5 MHz maximum channel bandwidth of the terminal device.

In another possible implementation, the terminal device may report the second capability parameter. The second capability parameter does not directly or implicitly indicate the value of M_{RB} to the communication peer device, but the second capability parameter indicates whether there is scheduling limitation on data transmission of UE.

For example, it may be predefined that the maximum channel bandwidth supported by the terminal device is 20 MHz, and the second capability parameter may be indicated by one bit state. For example, the bit state of the second capability parameter is 0, indicating that there is no scheduling limitation on data transmission of the terminal device. If the terminal device does not schedule transmission, the terminal device supports information transmission on resource blocks whose quantity is the fifth M_{RB} value. For another example, the bit state of the second capability parameter is 1, indicating that there is scheduling limitation on data transmission of the terminal device. If the terminal device schedules transmission, the terminal device supports information transmission on resource blocks whose quantity is the sixth M_{RB} value. The fifth M_{RB} value and the sixth M_{RB} value may be different values.

For another example, the bit state of the second capability parameter is 0, indicating that the terminal device supports information transmission on resource blocks whose quantity is the seventh M_{RB} value. For another example, the bit state of the second capability parameter is 1, indicating that the terminal device supports information transmission on resource blocks whose quantity is the eighth M_{RB} value. For example, the resource blocks whose quantity is the seventh M_{RB} value are a quantity of resource blocks included in the 20 MHz maximum channel bandwidth of the terminal device. For another example, the resource blocks whose quantity is the eighth M_{RB} value are a quantity of resource blocks included in the 5 MHz maximum channel bandwidth of the terminal device. In other words, the peer device communicating with the terminal device may implicitly obtain the M_{RB} value of the terminal device based on the obtained second capability parameter.

For example, a set of M_{RB} resource blocks may include at least (X physical resource blocks and Y physical resource blocks), where for example, when SCS=15 kHz, X=25 and Y=100; for example, when SCS=15 kHz, X=25 and Y=106; for example, when SCS=30 kHz, X=11 and Y=51; and for example, when SCS=30 kHz, X=12 and Y=51.

In still another example, the first capability may be that the terminal device supports the bandwidth decrease. For example, the terminal device may report the first capability based on the first capability parameter, and the first capability parameter may indicate that the terminal device supports the bandwidth decrease.

In an implementation, the first capability parameter is 1 bit. When a bit value is 0, that the terminal device supports the bandwidth decrease is indicated. Alternatively, when a bit value is 1, that the terminal device supports the bandwidth decrease is indicated.

In another implementation, the first capability parameter appears, indicating that the terminal device supports the bandwidth decrease. Alternatively, the first capability parameter does not appear, indicating that the terminal device supports the bandwidth decrease.

For example, the terminal device supports the bandwidth decrease, and the maximum channel bandwidth supported by the terminal device is a second bandwidth. For example, a value of the second bandwidth may be 5 MHz.

Optionally, the first capability may alternatively be that the terminal device does not support the bandwidth decrease. For example, the terminal device indicates, based on the first capability parameter, that the terminal device does not support the bandwidth decrease. For a specific implementation, refer to the foregoing implementation in which the terminal device supports the bandwidth decrease. Details are not described herein again. For example, the terminal device does not support the bandwidth decrease, the maximum channel bandwidth supported by the terminal device is a first bandwidth, and a value of the first bandwidth may be 20 MHz. In this case, the second capability may include that the terminal device supports the bandwidth decrease.

In yet another example, the second capability may be that the terminal device does not support the scheduling limitation. For example, the terminal device may report the second capability based on the second capability parameter, and the second capability parameter may indicate that the terminal device does not support the scheduling limitation.

In an implementation, the second capability parameter is 1 bit. When a bit value is 0, that the terminal device does not support the scheduling limitation is indicated. Alternatively, when a bit value is 1, that the terminal device does not support the scheduling limitation is indicated.

In another implementation, the second capability parameter appears, indicating that the terminal device does not support the scheduling limitation. Alternatively, the second capability parameter does not appear, indicating that the terminal device does not support the scheduling limitation.

For example, the terminal device does not support the scheduling limitation, and the maximum channel bandwidth supported by the terminal device is a first bandwidth. For example, a value of the first bandwidth may be 5 MHz.

For example, the second capability may alternatively be that the terminal device supports the scheduling limitation. For a specific implementation, refer to the foregoing implementation in which the terminal device does not support the scheduling limitation. Details are not described herein again. For example, the terminal device supports the scheduling limitation, and the maximum channel bandwidth supported by the terminal device is a second bandwidth. For example, a value of the second bandwidth may be 20 MHz. In this case, the first capability may include that the terminal device does not support the bandwidth decrease.

For example, a capability set that is indicated by the first capability parameter and that is of the terminal device may be {supporting the bandwidth decrease, supporting the scheduling limitation}. The terminal device may report, based on the first capability parameter, whether the terminal device supports the bandwidth decrease or the scheduling limitation. For example, the terminal device supports the scheduling limitation, the maximum channel bandwidth supported by the terminal device is the first bandwidth, and the value of the first bandwidth may be 20 MHz. For another example, the terminal device supports the bandwidth decrease, the maximum channel bandwidth supported by the terminal device is the second bandwidth, and the value of the second bandwidth may be 5 MHz. In this case, a capability set that is indicated by the second capability parameter and that is of the terminal device may be {not supporting the bandwidth decrease, not supporting the scheduling limitation}. Alternatively, the capability set that is indicated by the first capability parameter and that is of the terminal device may be {supporting the bandwidth decrease, not supporting the scheduling limitation}. In this case, the capability set that is indicated by the second capability parameter and that is of the terminal device may be {not supporting the bandwidth decrease, supporting the scheduling limitation}. Alternatively, the capability set that is indicated by the first capability parameter and that is of the terminal device may be {not supporting the bandwidth decrease, supporting the scheduling limitation}. In this case, the capability set that is indicated by the second capability parameter and that is of the terminal device may be {supporting the bandwidth decrease, not supporting the scheduling limitation}. Alternatively, the capability set that is indicated by the first capability parameter and that is of the terminal device may be {not supporting the bandwidth decrease, not supporting the scheduling limitation}. In this case, the capability set that is indicated by the second capability parameter and that is of the terminal device may be { supporting the bandwidth decrease, supporting the scheduling limitation}, or the like.

In this application, the first capability parameter may include two independent parameters, and the two independent parameters respectively indicate a maximum downlink radio frequency processing bandwidth of the terminal device and a maximum uplink radio frequency processing bandwidth of the terminal device. For example, the second capability parameter may also include two independent parameters, and the two independent parameters respectively indicate a maximum downlink baseband processing bandwidth of the terminal device and a maximum uplink baseband processing bandwidth of the terminal device. For another example, the second capability parameter may include two independent parameters, and the two independent parameters respectively indicate that downlink information transmission is performed on the M_{RB} resource blocks and uplink information transmission is performed on the N_{RB} resource blocks.

In an example, the terminal device may alternatively report the first capability or the second capability of the terminal device based on the third capability parameter. For example, when a bit state of the third capability parameter is a first bit state, the first capability of the terminal device is indicated. For another example, when a bit state of the third capability parameter is a second bit state, the second capability of the terminal device is indicated. For still another example, a bit state of the third capability parameter belongs to a first status set (for example, the "first status set" may be understood as a set of some reserved bit states), and the first capability of the terminal device is indicated. For still another example, a bit state of the third capability parameter belongs to a second status set, indicating the second capability of the terminal device. For example, the third capability parameter does not appear or is not transmitted, indicating that the capability of the terminal device is the first capability. Alternatively, the third capability parameter appears or is transmitted, indicating that the capability of the terminal device is the second capability.

For example, the first capability may be that the terminal device supports information transmission on the N_{RB} resource blocks, and the second capability is the terminal device performs information transmission on the M_{RB} resource blocks. For example, the third capability parameter includes one bit state. For example, the bit state of the third capability parameter is 0, indicating that the terminal device supports information transmission on the N_{RB} resource blocks. For example, the bit state of the third capability parameter is 1, indicating that the terminal device supports information transmission on the M_{RB} resource blocks. For example, the value of M_{RB} is related to the maximum channel bandwidth and/or the subcarrier spacing of the terminal device. For another example, the value of M_{RB} is related to the bandwidth and/or the subcarrier spacing of the terminal device. For example, M_{RB} may be a predefined value. For example, M_{RB} may be a value indicated by the terminal device. For example, M_{RB} may be a value indicated by the terminal device based on another capability parameter.

For example, the first capability may be the maximum channel bandwidth supported by the terminal device, and the second capability may be the terminal device performs information transmission on the M_{RB} resource blocks. Specifically, the third capability parameter may be indicated by the bit state. For example, the bit state of the third capability parameter is 0, indicating that the maximum channel bandwidth supported by the terminal device is A MHz, where for example, A=5. For another example, the bit state of the third capability parameter is 1, indicating that the terminal device performs information transmission on the M_{RB} resource blocks. In this case, the bit state of the third capability parameter is 1, further indicating that the maximum channel bandwidth supported by the terminal device is B MHz, where for example, B=20.

In another example, the terminal device may alternatively report the first capability and the second capability of the terminal device based on the fourth capability parameter. For example, when a bit state of the fourth capability parameter is a first bit state, the first capability and the second capability of the terminal device are indicated. For another example, when a bit state of the fourth capability parameter is a second bit state, the first capability and the second capability of the terminal device are indicated. For still another example, a bit state of the fourth capability parameter belongs to a first status set, indicating the first capability and the second capability of the terminal device. For still another example, a bit state of the fourth capability parameter belongs to a second status set, indicating the first capability and the second capability of the terminal device. For example, the fourth capability parameter does not appear or is not transmitted, indicating that the capability of the terminal device is the first capability. Alternatively, the fourth capability parameter appears or is transmitted, indicating that capabilities of the terminal device are the first capability and the second capability.

In an example, the terminal device sends a fifth capability parameter to the network device. The fifth capability parameter indicates that the terminal device supports reporting of the first capability and/or the second capability, and/or the fifth capability parameter indicates that the terminal device does not support reporting of the first capability and/or the second capability.

In an implementation, for example, the fifth capability parameter appears, indicating that the terminal device supports reporting of the first capability and/or the second capability. Alternatively, the fifth capability parameter does not appear, indicating that reporting of the first capability and/or the second capability is supported. Alternatively, the fifth capability parameter appears, indicating that the terminal device does not support reporting of the first capability and/or the second capability. Alternatively, the fifth capability parameter does not appear, indicating that reporting of the first capability and/or the second capability is not supported.

In another implementation, the fifth capability parameter is 1 bit. When a bit value is 0, that the terminal device supports the first capability and/or the second capability is indicated. Alternatively, when a bit value is 1, that the terminal device supports the first capability and/or the second capability is indicated. Alternatively, when a bit value is 0, that the terminal device does not support the first capability and/or the second capability is indicated. Alternatively, when a bit value is 1, that the terminal device does not support the first capability and/or the second capability is indicated.

In still another implementation, for example, the fifth capability parameter appears, indicating that the terminal device supports reporting of the first capability but the terminal device does not support reporting of the second capability. For another example, the fifth capability parameter does not appear, indicating that the terminal device supports reporting of the first capability but the terminal device does not support reporting of the second capability. Alternatively, the fifth capability parameter is 1 bit. When a bit value is 0, that the terminal device supports the first capability and the terminal device does not support the second capability is indicated. Alternatively, when a bit value is 1, that the terminal device supports the first capability and the terminal device does not support the second capability is indicated.

In another example, the terminal device sends a fifth capability parameter to the network device. The fifth capability parameter indicates that the terminal device supports reporting of the first capability and/or the second capability, and/or the fifth capability parameter indicates the third capability of the terminal device. The third capability and the first capability are different, and the third capability and the second capability are different. For example, the third capability may include the maximum channel bandwidth of the terminal device.

In this application, "the fifth capability parameter indicates the third capability of the terminal device" may also be understood as "the fifth capability parameter indicates that the terminal device does not support reporting of the first capability and/or the second capability". The third capability and the first capability are different, and the third capability and the second capability are different. For example, the third capability includes the maximum channel bandwidth of the terminal device. For example, the fifth capability parameter may indicate the maximum channel bandwidth of the terminal device. In this case, the terminal device does not support reporting of the first capability and/or the second capability.

Specifically, for an implementation in which the fifth capability parameter indicates the third capability, refer to the descriptions in the foregoing embodiments. Details are not described herein again.

As described above, in this application, the terminal device may report the first capability and/or the second capability via different methods. Therefore, in an example, the terminal device may send a capability parameter #1 to the network device, and the capability parameter #1 may further indicate that the terminal device supports reporting of the first capability and/or the second capability via which method or methods. For example, the capability parameter #1 appears, indicating that the terminal device supports reporting of the capability via a method k. Alternatively, the capability parameter #1 does not appear, indicating that the terminal device supports reporting of the capability via a method k, where k=1, 2, 3, 4, or 5. For another example, the capability parameter #1 is 1 bit. When a bit value is 0, that the terminal device supports reporting of the capability via a method k is indicated. Alternatively, when a bit value is 1, that the terminal device supports reporting of the capability via a method k is indicated.

In this application, the terminal device may further indicate, based on a capability parameter #2 (for example, a downlink channel bandwidth field (channelBWs-DL) and/or an uplink channel bandwidth field (channelBWs-UL)), whether an L MHz channel bandwidth is supported. Alternatively, the terminal device indicates an L MHz channel bandwidth based on a capability parameter #2, where L is less than 5. For example, a bitmap (bitmap) form may indicate whether the terminal device supports a channel bandwidth less than 5 MHz. For example, a most significant bit of the capability parameter #2 indicates whether the channel bandwidth less than 5 MHz is supported. For example, the most significant bit is a bit that corresponds to a channel bandwidth that is of a conventional terminal device and that is greater than 20 MHz. For example, the most significant bit may be a 10^{th} bit. For another example, the most significant bit may be a 5^{th} bit. For example, the bitmap may indicate the L MHz channel bandwidth in the following sequence: {5 MHz, 10 MHz, 15 MHz, 20 MHz, L MHz, ...}. For another example, the bitmap may alternatively indicate L MHz channel bandwidth in the following sequence: {5 MHz, 10 MHz, 15 MHz, 20 MHz, ..., L MHz, ...}. For still another example, the bitmap may indicate L MHz channel bandwidth in the following sequence: {5 MHz, 10 MHz, 15 MHz, 20 MHz, ..., L MHz } .

According to the foregoing technical solutions, in this application, the terminal device can independently report the maximum radio frequency processing bandwidth and the maximum baseband processing bandwidth, to implement decoupled reporting of the maximum channel bandwidths and/or the maximum processing bandwidths of the radio frequency and the baseband. The reporting manner of the terminal device can be more flexible. The maximum radio frequency processing bandwidth and the maximum baseband processing bandwidth of the terminal device may be the same, or may be different. In other words, there may be different forms or different types of terminal devices. According to the solutions in this application, the flexible reporting manners can be provided for the terminal devices in different forms or different types to report capabilities. For example, the maximum radio frequency processing bandwidth and the maximum baseband processing bandwidth of the terminal device are different. If decoupled reporting of the maximum radio frequency processing bandwidth and the maximum baseband processing bandwidth cannot be implemented, when allocating the resource used for the information transmission, the network device may consider only the maximum radio frequency processing bandwidth, and the allocated resource may exceed the maximum baseband processing bandwidth capability supported by the terminal device. When the information is transmitted from the radio frequency to the baseband, the baseband cannot ensure that the information can be correctly received. According to the technical method in this application, when allocating the resource used for the information transmission, the network device can consider both the maximum radio frequency processing bandwidth and the maximum baseband processing bandwidth, to ensure proper resource allocation or resource scheduling, thereby improving the data transmission performance of the terminal device. In addition, different factors such as the costs, the implementation complexity (the storage and computing resources), the processing delays, the compatibility, the scenarios, the deployment scenarios, and the commercial application are considered. The terminal devices in different forms or different types have different requirements on the baseband capabilities (like the bandwidths) or the radio frequency capabilities (like the bandwidths). In the foregoing capability reporting manner, compromise and adaptation can be implemented on the foregoing factors to the maximum extent.

This application further provides an information transmission method 300. For a flowchart of the method, refer to FIG. 2. Specifically, the method includes the following steps.

Step 301: A terminal device reports a fourth capability to a network device. Correspondingly, the network device obtains the fourth capability of the terminal device.

In an example, the fourth capability may include that the terminal device supports a bandwidth part BWP size being greater than a first characteristic parametric value of the terminal device, and the first characteristic parametric value includes at least one or more of the following: a maximum radio frequency processing bandwidth, a transmission resource related to a maximum radio frequency processing capability, a maximum channel bandwidth, a maximum baseband processing bandwidth, a transmission resource related to a maximum baseband processing capability, or a transmission resource related to scheduling limitation.

In a possible implementation, the terminal device may report a third capability based on a capability parameter #3 (an example of a sixth capability parameter), and the capability parameter #3 may indicate that the BWP size is greater than the maximum channel bandwidth of the terminal device. For example, the BWP size may be greater than a maximum value of the maximum radio frequency processing bandwidth/capability and the maximum baseband processing bandwidth/capability of the terminal device, and/or the BWP size may be greater than a minimum value of the maximum radio frequency processing bandwidth/capability and the maximum baseband processing bandwidth/capability of the terminal device. For another example, the BWP size may be greater than the maximum radio frequency processing bandwidth/capability of the terminal device. For another example, the BWP size is greater than the maximum baseband processing bandwidth/capability of the terminal device. For still another example, the BWP size is greater than M_{RB} resource blocks. For still another example, the BWP size is greater than N_{RB} resource blocks.

For example, the capability parameter #3 may directly or implicitly indicate whether the terminal device supports the BWP size being greater than the capability of the terminal device. For example, the capability parameter #3 may be indicated by one bit state. For example, the bit state of the capability parameter is 0, indicating that the terminal device supports the BWP size being greater than the maximum baseband processing bandwidth of the terminal device. For example, the maximum baseband processing bandwidth of the terminal device may be 5 MHz, and the BWP size may be 20 MHz. Alternatively, the bit state of the capability parameter #3 is 1, indicating that the terminal device does not support the BWP size being greater than the maximum baseband processing bandwidth of the terminal device. For example, the maximum baseband processing bandwidth of the terminal device is 5 MHz, and the BWP size is 5 MHz. For example, the maximum baseband processing bandwidth of the terminal device is 20 MHz, and the BWP size is 20 MHz.

In another implementation, the capability parameter #3 does not appear or is not transmitted, indicating that the terminal device does not support the BWP size being greater than the first characteristic parametric value. For example, the capability parameter #3 appears or is transmitted, indicating that the terminal device supports the BWP size being greater than the first characteristic parametric value. For another example, the capability parameter #3 appears, indicating that the BWP size of the terminal device is 20 MHz, and the maximum baseband processing bandwidth of the terminal device is 5 MHz.

In still another possible implementation, the terminal device may report the fourth capability based on a capability parameter #4 and a capability parameter #5. The capability parameter #4 may indicate the BWP size of the terminal device. For example, a bit state of the capability parameter #4 is 0, indicating that the BWP size of the terminal device is 20 MHz. For example, the bit state of the capability parameter #4 is 1, indicating that the BWP size of the terminal device is 5 MHz. The capability parameter #5 indicates whether the terminal device supports the scheduling limitation. For example, a bit state of the capability parameter #5 is 0, indicating that the terminal device supports the scheduling limitation. The bit state of the capability parameter #5 is 1, indicating that the terminal device does not support the scheduling limitation. For example, the bit state of the capability parameter #4 is 0 (indicating that the BWP size of the terminal device is 20 MHz), and the bit state of the capability parameter #5 is 0 (indicating that the terminal device supports the scheduling limitation). This indicates that the terminal device does not support the BWP size being greater than the scheduling limitation. For another example, the bit state of the capability parameter #4 is 0, and the bit state of the capability parameter #5 is 1 (indicating that the terminal device does not support the scheduling limitation). This indicates that the terminal device supports the BWP size being greater than the scheduling limitation.

Based on the foregoing technical solutions, in this application, the BWP size may be greater than the first characteristic parametric value of the terminal device. A bandwidth of the terminal device may be the maximum channel bandwidth of the terminal device, the maximum radio frequency channel bandwidth of the terminal device, the maximum baseband bandwidth of the terminal device, or the scheduling limitation for the terminal device. In other words, the BWP size is configured more flexibly, and may be applicable to different possible terminal device forms.

In another example, the terminal device may further report the fourth capability. The fourth capability includes that the terminal device supports the bandwidth part BWP size being greater than a second characteristic parametric value of the terminal device, and the second characteristic parametric value includes at least one or more of the following: a bandwidth of a synchronization signal block, a bandwidth of a control resource set, or X resource blocks, where X is a positive integer greater than 1.

For example, a minimum BWP size of the terminal device is the X resource blocks or Y MHz, where X is the positive integer greater than 1. In other words, the minimum BWP size of the terminal device is definitely greater than one resource block. For example, the maximum channel bandwidth of the terminal device is less than a size of the resource block, and the terminal device supports the minimum BWP size being greater than the maximum channel bandwidth of the terminal device. In other words, the minimum BWP size is greater than the size of the resource block. For another example, a value of X is 6, the minimum BWP size of the terminal device is six resource blocks. For another example, a value of X is 12, the minimum BWP size of the terminal device is 12 resource blocks. For another example, a value of X is 20, the minimum BWP size of the terminal device is 20 resource blocks. For another example, a value of X is 24, the minimum BWP size of the terminal device is 24 resource blocks. For another example, a value of X is 48, the minimum BWP size of the terminal device is 48 resource blocks. For another example, a value of Y is 2.16, the minimum BWP size of the terminal device is 2.16 MHz. For another example, a value of Y is 4.32, the minimum BWP size of the terminal device is 4.32 MHz. For another example, a value of Y is 8.64, the minimum BWP size of the terminal device is 8.64 MHz. For another example, a value of Y is 7.2, the minimum BWP size of the terminal device is 7.2 MHz. For another example, a value of Y is 17.28, the minimum BWP size of the terminal device is 17.28 MHz.

For another example, the minimum BWP size of the terminal device is not less than a bandwidth of a specific channel. For example, the terminal device does not support 6-1a. "6-1a" is a capability/feature index of a terminal device, and BWPs of this type of terminal devices are not limited by BWP bandwidths. For example, the specific channel may be a synchronization signal block (synchronization signal block, SSB). When SCS=30 kHz, the minimum BWP size of the terminal device may be 7.2 MHz. For example, the minimum BWP size of the terminal device may be the 12 resource blocks. In this way, a BWP of the terminal device can accommodate a synchronization signal, so that the terminal device performs synchronization, frequency of frequency retuning is reduced, and power consumption of the terminal device is reduced.

For example, the specific channel may be a downlink control channel. A bandwidth of the downlink control channel is a size of the control resource set. The minimum BWP size of the terminal device may be 17.28 MHz. For example, the minimum BWP size of the terminal device may be 8.64 MHz.

Step 302: The network device allocates a resource to the terminal device.

In an implementation, the network device may allocate the resource to the terminal device based on the fourth capability reported by the terminal device to the network device. For example, the network device may allocate a resource #A to the terminal device based on a received capability that is reported by the terminal device and that indicates that a supported BWP is greater than the maximum baseband processing bandwidth of the terminal device. For example, the resource #A may be a resource block quantity, a transport block size, a channel bandwidth, a partial channel bandwidth, or an operating frequency range. For another example, the network device may allocate a resource #B to the terminal device based on a received capability that indicates the minimum value of the BWP size supported by the terminal device is greater than or equal to the resource block. For example, the resource #B be a resource block quantity, a transport block size, a channel bandwidth, a partial channel bandwidth, or an operating frequency range. Optionally, the network device may alternatively allocate a time domain resource based on the capability reported by the terminal device.

In another implementation, the network device may not allocate the resource to the terminal device based on a first capability and/or a second capability reported by the terminal device to the network device. For example, the network device may allocate the resource to the terminal device based on a current channel status, a network load status, a historical resource allocation status of the terminal device, and/or the like. Optionally, the network device may directly allocate the resource to the terminal device without referring to any condition.

Step 303: The network device indicates the allocated resource to the terminal device. Correspondingly, the terminal device obtains the resource allocated by the network device.

Specifically, refer to the descriptions in step 203 in the method 200. Details are not described herein again.

Step 304: The terminal device sends or receives information on the allocated resource.

Step 305: The network device receives or sends information on the resource.

Specifically, refer to the descriptions in step 204 and step 205 in the method 200. Details are not described herein again.

Based on the foregoing technical solution, in this application, for example, the minimum BWP size of the terminal device may be greater than the resource block. Therefore, during indication, that the BWP is the PRB does not need to be indicated, thereby saving bits. For the specific channel, the minimum BWP size of the terminal device may be limited, to ensure receiving of the specific channel.

This application further provides an information transmission method 400. For a flowchart of the method, refer to FIG. 2. Specifically, the method includes the following steps.

Step 401: A terminal device reports a fifth capability to a network device. Correspondingly, the network device obtains the fifth capability of the terminal device.

In an example, the terminal device may send or report a seventh capability parameter to the network device. The seventh capability parameter may indicate a fifth capability in each of one or more sets, and the fifth capability includes at least one or more of the following used by the terminal device to transmit a channel or signal in each set: a maximum radio frequency processing bandwidth, a maximum radio frequency processing capability, a maximum channel bandwidth, a maximum baseband processing bandwidth, a maximum baseband processing capability, or scheduling limitation. Each set includes at least one channel or signal. For example, for transmission of a downlink channel or signal, "transmitting a channel or signal" indicates receiving of the channel or signal by the terminal device, and indicates sending of the channel or signal by the network device. For another example, for transmission of an uplink channel or signal, "transmitting a channel or signal" indicates sending of the channel or signal by the terminal device, and indicates receiving of the channel or signal by the network device.

For example, in a set division manner, division may be performed based on types or features of channels or signals. For example, as shown in Table 2, two sets may be obtained through division. For example, demodulation of a channel or signal in a set #A may be based on a demodulation reference signal. The set #A may include one or more of the following: a physical downlink control channel (physical downlink control channel, PDCCH), a physical uplink control channel (physical uplink control channel, PUCCH), a physical downlink shared channel (physical downlink shared channel, PDSCH), and a physical uplink shared channel (physical uplink shared channel, PUSCH). For example, a channel or signal in a set #B may be used for measurement. The set #B may include one or more of the following: a channel state information reference signal (CSI-RS), a sounding reference signal (sounding reference signal, SRS), and a tracking reference signal (tracking reference signal, TRS). For another example, the channels or signals may be divided into three sets: a set #A, a set #B, and a set #C. For example, the set #A may include a PDSCH and/or a PUSCH. For example, the set #B may include a PDCCH and/or a PUCCH. For example, the set #C may include one or more of {CSI-RS, SRS, TRS}.

**Table 2 Sets obtained by dividing the channels or signals**

| Set | Channel/Signal | Maximum resource |
|---|---|---|
| A | PDCCH, PUCCH, | First resource |
| | PDSCH, and PUSCH | |
| B | CSI-RS, SRS, and TRS | Second resource |

Different sets may correspond to different maximum resources. For channels or signals belonging to different sets, supported maximum resources reported by the terminal device are different. For channels or signals belonging to a same set, supported maximum resources reported by the terminal device are the same. For example, the maximum resource of the set #A is the first resource. For example, the maximum resource of the set #B is the second resource.

In a possible implementation, the seventh capability parameter may indicate the maximum resource of the set #A. For example, the seventh capability parameter may be one bit state. For example, the bit state is 1, indicating that a maximum frequency domain resource of the set #A is 11 resource blocks. For example, the bit state is 0, indicating that a maximum frequency domain resource of the set #A is 12 resource blocks.

In another possible implementation, the seventh capability parameter may indicate the maximum resource of the set #B. For example, a maximum frequency domain resource of the set #B may be indicated in a bitmap form. In a BWP transmission bandwidth range, one bit state (for example, which may be one bit state in a frequency domain resource (frequency domain resource) field) may indicate the maximum frequency domain resource of the set #B. For example, the bit state is 1, indicating that the maximum frequency domain resource of the set #B is six resource blocks. For example, the bit state is 0, indicating that the maximum frequency domain resource of the set #B is 12 resource blocks. For another example, in a BWP transmission bandwidth range, 2 bits (for example, which may be 2 bits in a frequency domain resource field) may indicate the maximum frequency domain resource of the set #B. For example, a first bit state is 1, and a second bit state is 1, indicating that the maximum frequency domain resource of the set #B is 12 resource blocks. For example, a first bit state is 0, and a second bit state is 1, indicating that the maximum frequency domain resource of the set #B is six resource blocks. For example, a first bit state is 1, and a second bit state is 0, indicating that the maximum frequency domain resource of the set #B is 11 resource blocks. For example, a first bit state is 0, and a second bit state is 0, indicating that the maximum frequency domain resource of the set #B is 24 resource blocks. In still another implementation, the seventh capability parameter may indicate a maximum resource of the set #C. For example, a maximum frequency domain resource of the set #C is 11 resource blocks. For example, a maximum frequency domain resource of the set #C is 12 resource blocks. For example, one bit state may indicate the maximum resource of the set #C. For example, the bit state is 1, indicating that the maximum frequency domain resource of the set #C is 11 resource blocks. For another example, the bit state is 0, indicating that the maximum frequency domain resource of the set #C is 12 resource blocks.

It should be noted that a bit in the seventh capability parameter may indicate the maximum frequency domain resource, the maximum channel bandwidth, or an operating frequency band range. If the maximum frequency domain resource indicated by the bit in the seventh capability parameter is i resource blocks, a value of i may be a discrete integer like 0, 6, 10, 11, 12, 20, 24, or 48.

Step 402: The network device allocates a resource to the terminal device.

In an implementation, the network device may allocate the resource to the terminal device based on the fifth capability reported by the terminal device to the network device. For example, the network device may allocate a resource #C to the terminal device based on the fifth capability, of the set #B, reported by the terminal device (for example, the maximum resource of the set #B is six resource blocks). For example, the resource #C be a resource block quantity, a transport block size, a channel bandwidth, a partial channel bandwidth, or an operating frequency range. Optionally, the network device may alternatively allocate a time domain resource based on the capability reported by the terminal device.

In another implementation, the network device may not allocate the resource to the terminal device based on a first capability and/or a second capability reported by the terminal device to the network device. In other words, the network device may allocate the resource to the terminal device based on a current channel status, a network load status, a historical resource allocation status of the terminal device, and/or the like. Optionally, the network device may directly allocate the resource to the terminal device without referring to any condition.

Step 403: The network device indicates the allocated resource to the terminal device. Correspondingly, the terminal device obtains the resource allocated by the network device.

Specifically, refer to the descriptions in step 203 in the method 200. Details are not described herein again.

Step 404: The terminal device sends or receives information on the allocated resource.

Step 405: The network device receives or sends information on the allocated resource.

Specifically, refer to the descriptions in step 204 and step 205 in the method 200. Details are not described herein again.

It should be understood that the "first capability parameter" to the "seventh capability parameter" and the "capability parameter #1" to the "capability parameter #5" in this application may be indicated by same or different signaling. The signaling may be control information or higher layer signaling. For example, the control information may be downlink control information (downlink control information, DCI) or uplink control information (uplink control information, UCI). For example, the higher layer signaling may be radio resource control (radio resource control, RRC) signaling or media access control control element (media access control control element, MAC CE) signaling. Types of different signaling may be the same or different. For example, the signaling may be the DCI or the UCI, or may be the RRC signaling or the MAC CE signaling. This is not limited in this application.

According to the foregoing technical solutions, in this application, the channels or signals may be grouped into one or more sets, and the terminal device may report, in a set manner, a maximum resource for transmitting the channel or signal in each of the one or more sets. The channel or signal in the set in this application is not limited to a data channel (for example, the PDSCH and/or the PUSCH), and control channels (for example, the PDCCH and the PUCCH) and/or measurement channels/signals (for example, the CSI-RS, the SRS, and the TRS) may be further included. In addition, in the set reporting manner, reporting frequency of the terminal device can be reduced, bit overheads during reporting of the terminal device can be reduced, a reporting delay can be reduced, and costs of the terminal device may be further reduced. In addition, according to the method, baseband processing capabilities and radio frequency processing capabilities may be defined based on a combination of different channels or signals, so that the terminal device can implement different baseband capabilities and radio frequency capabilities in a more refined manner. This provides more precise control and compromise for terminal device costs, implementation complexity, compatibility, application scenarios, actual deployment, and commercial application.

Generally, when the terminal device needs to transmit the information, if a frequency range of subsequent information transmission and a frequency range of current information transmission exceed the maximum channel bandwidth of the terminal device (for example, exceed a BWP supported by the terminal device), the terminal device needs to tune to a new frequency domain resource through frequency retuning to transmit the information. In a frequency retuning process of the terminal device, information transmission is interrupted.

The BWP may be understood as a bandwidth resource, or may be understood as a resource. The network device configures at least one BWP resource for a terminal user, and each BWP resource has a corresponding BWP identifier ID. The network device may configure a related parameter for each BWP. For example, the BWP-related parameter includes one or more of a BWP start location, a BWP size, a subcarrier spacing, a control channel resource set, a data transmission configuration, a demodulation reference signal (demodulation reference signal, DMRS) configuration, and the like. For example, for different BWPs or different BWP IDs, the network device may configure a same BWP-related parameter. For another example, for different BWPs or different BWP IDs, the network device may configure different BWP-related parameters.

There may be the following three frequency retuning manners. The following briefly describes the three frequency retuning manners.

Manner 1: Frequency retuning is performed inside the BWP, that is, the BWP ID does not change, and frequency retuning is performed inside the BWP. When the terminal device performs frequency retuning inside the BWP, a radio frequency does not need to be switched, and only digital logic of a baseband needs to be switched. For example, switching time or duration of frequency retuning performed inside the BWP is at a level of dozens of microseconds or at a level of hundreds of microseconds. For example, when frequency retuning is performed inside the BWP, required processing time may be 70 microseconds.

Manner 2: The BWP ID may change (or the BWP ID may not change), and in this case, only a center frequency in BWP ID-related parameter configurations changes. For example, there may be the following three possible implementation scenarios. Scenario 1: The BWP ID does not change, and only one BWP start offset (start offset) is configured for one BWP ID, where at least one of frequency domain resources indicated by the start offset is outside the BWP. Scenario 2: The BWP ID does not change; but one BWP ID may be associated with a plurality of BWP start offsets, and only center frequency channel numbers in frequency domain resources indicated by the plurality of start offsets are different, where at least one of frequency domain resources indicated by at least one start offset is outside the BWP. Scenario 3: The BWP ID changes, but only BWP center frequency channel numbers in BWP configurations associated with different BWP IDs change. In the manner 2, the radio frequency needs to be switched, but BWP-related parameter configurations other than the center frequency channel number do not need to be updated. For example, the switching time is at the level of hundreds of microseconds. For example, guard time used for the frequency retuning in the manner 2 may be 140 microseconds.

Manner 3: The BWP is switched, that is, the BWP ID changes. It may also be understood that the network device needs to reconfigure a BWP-related parameter for the changed BWP ID. The BWP switching requires radio frequency switching, and radio resource control (radio resource control, RRC) reconfiguration is required to update the BWP. For example, the switching time is at a level of slots. For example, processing time used for the BWP switching may be one slot.

It can be learned from the foregoing description that in the manner 1, frequency retuning is performed inside the BWP, and time, for example, first processing time, required for the frequency retuning is shortest. In the manner 2, frequency retuning is performed outside the BWP, the BWP center frequency channel number needs to be changed, and time, for example, second processing time, required for the frequency retuning is greater than the first processing time. In the manner 3, the BWP is switched. In comparison with the manner 2, frequency retuning needs to be performed outside the BWP, but in addition to that the BWP center frequency channel number is changed, the BWP switching further requires another BWP-related parameter to be reconfigured via the RRC. Therefore, time occupied by the frequency retuning is longest. For example, third processing time is greater than the second processing time, and certainly is also greater than the first processing time.

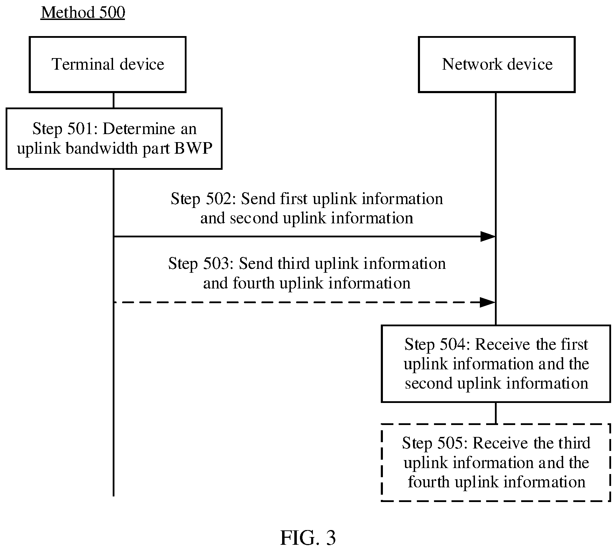

FIG. 3 shows an information transmission method 500 according to this application. Uplink transmission in the method 500 is used as an example for description. A terminal device in the method may be a RedCap terminal device, or may be a terminal device in an NR system. The method includes the following steps.

Step 501: The terminal device determines an uplink bandwidth part BWP.

For example, the uplink BWP may be pre-specified by a network device. For another example, the BWP may be indicated by the network device. For another example, the BWP may be a BWP configured by the network device for the terminal device based on a capability of the terminal device after the terminal device reports the capability in the method 200 to the method 400.

Step 502: The terminal device sends first uplink information and second uplink information. Correspondingly, the network device receives the first uplink information and the second uplink information.

For example, the terminal device may send the first uplink information in a first time unit. For example, the terminal device may send the second uplink information in a second time unit.

In this application, the "time unit" may be, for example, one or more radio frames, one or more subframes, one or more slots, one or more mini-slots, or one or more symbols. The symbol may be an orthogonal frequency division multiplexing (orthogonal frequency division multiplexing, OFDM) symbol, a discrete fourier transform spread orthogonal frequency division multiplexing (discrete fourier transform spread orthogonal frequency division multiplexing, DFT-S-OFDM) symbol, or the like. Alternatively, the time unit may be 1 second (second, "s" for short), a plurality of seconds, 1 millisecond (millisecond, "ms" for short), a plurality of milliseconds, or the like.

For example, the first time unit is a slot #1, and the second time unit is a slot #2. For another example, the first time unit may be a second symbol in a slot #3, and the second time unit may be a fourth symbol in a slot #4.

In this application, a resource used to send the first uplink information may be a resource inside the uplink BWP, and a resource used to send the second uplink information may also be a resource inside the uplink BWP. In other words, frequency retuning may be performed on the first uplink information and the second uplink information inside the BWP.

When the frequency retuning exists between the first uplink information and the second uplink information sent by the terminal device, guard time used for the frequency retuning is greater than or equal to first processing time. Alternatively, the frequency retuning exists between the first uplink information and the second uplink information sent by the terminal device, and a time interval between an end moment of sending the first uplink information and a start moment of sending the second uplink information is greater than or equal to first processing time.

In this application, the "processing time" may also be understood as a "processing delay", "processing duration", or the "guard time". For example, the following "switching time", "switching duration", and a "switching delay" may also be replaced with each other.

Optionally, step 503 may be further included: The terminal device sends third uplink information and fourth uplink information. Correspondingly, the network device receives the third uplink information and the fourth uplink information.

It should be understood that step 503 and step 502 may be used in combination. In this case, the two steps may alternatively not be subject to a specific sequence. Alternatively, step 503 and step 502 may not be combined, and are used as an independent solution.

For example, the terminal device may send the third uplink information in a third time unit, and the terminal device sends the fourth uplink information in a fourth time unit. For descriptions of the third time unit and the fourth time, refer to descriptions of the first time unit and the second time unit in step 502. Details are not described herein again.

In this application, as described above, in an implementation (for example, the scenario 1 and the scenario 2 in the foregoing manner 2): A BWP ID used by the terminal device to send the third uplink information is the same as a BWP ID used by the terminal device to send the fourth uplink information, and at least one of resources used to send the fourth uplink information is outside a BWP for the third uplink information. In another implementation (for example, the scenario 3 in the foregoing manner 2), a BWP ID used by the terminal device to send the third uplink information is different from a BWP ID used by the terminal device to send the fourth uplink information, and only BWP center frequency channel numbers in BWP configurations associated with different BWP IDs are different. In still another implementation (for example, the foregoing manner 3), a BWP ID used by the terminal device to send the third uplink information is different from a BWP ID used by the terminal device to send the fourth uplink information, and in addition to BWP center frequency channel numbers, other parameter configurations in BWP configurations associated with different BWP IDs may be different.

When the frequency retuning exists between the third uplink information and the fourth uplink information sent by the terminal device, guard time used for the frequency retuning is greater than or equal to second processing time. Alternatively, when the frequency retuning exists between the third uplink information and the fourth uplink information sent by the terminal device, a time interval between an end moment of sending the third uplink information and a start moment of sending the fourth uplink information is greater than or equal to second processing time.

The "moments" in the "start moment" and the "end moment" in this application may also be understood as granularities of "time units". For example, the "moment" may be understood as a plurality of radio frames, one or more subframes, one or more slots, one or more mini-slots, or one or more symbols. Certainly, the "moment" may also be understood as a second, a plurality of seconds, a millisecond, a plurality of milliseconds, a microsecond, or the like. Details are not described below again.

The "guard time" in this application may include time of the frequency retuning and/or time of other interaction, adaptation, and the like caused by the frequency retuning. Details are not described below again.

In this application, the first processing time or the second processing time may be pre-specified by the network device, or the first processing time and/or the second processing time are/is configured or indicated by the network device. For example, the first processing time may be pre-specified by the network device. For example, the first processing time is 70 microseconds or 140 microseconds. For example, the first processing time may be determined based on a capability of the terminal device. For example, the first processing time supported and reported by the terminal device is 70 microseconds, and the guard time used for the frequency retuning should be greater than or equal to 70 microseconds. For another example, the first processing time is configured or indicated by the network device. For example, the first processing time indicated by the network device may be a value of 70 microseconds or 140 microseconds.

The first processing time and the second processing time may be at the granularities of "time units". For example, the second processing time may be 1/4 of a slot. The first processing time and the second processing time may also be seconds, milliseconds, or microseconds. For example, the first processing time is 65 microseconds, or the like. This is not limited.

In a possible implementation, the first processing time and the second processing time are different. For example, values of the first processing time and the second processing time are different.

In another possible implementation, the first processing time and the second processing time are different types of processing time. For example, the first processing time and/or the second processing time may include different time, for example, recovery time of a module in a chip, antenna switching time, or carrier switching time. For example, the first processing time and the second processing time are partially different. Alternatively, when a subcarrier spacing is 15 kHz, the first processing time and the second processing time are the same. When the subcarrier spacing is 30 kHz, the first processing time and the second processing time are different.

For example, the first processing time may be a set. For example, a set #A includes {60 microseconds, 70 microseconds, 100 microseconds, 140 microseconds}. The second processing time may also be a set. For example, a set #B includes {60 microseconds, 65 microseconds, 100 microseconds, 140 microseconds}. In other words, the second value in the set #A and the second value in the set #B are different. For another example, the first processing time is one symbol, and the second processing time is 140 microseconds. For another example, the first processing time is 70 microseconds, and the second processing time is 1 millisecond. For another example, the first processing time is time in which a radio frequency is not switched, and the second processing time is time in which a radio frequency is switched.

In still another possible implementation, the first processing time is less than the second processing time. For example, the first processing time is 65 microseconds, and the second processing time is 130 microseconds.

In this application, the first processing time, the second processing time, and a BWP switching delay are different. Alternatively, the first processing time, the second processing time, and a BWP switching delay may be specified different processing time. Alternatively, the first processing time may be less than the second processing time, and the second processing time may be less than a BWP switching delay.

In this application, the first uplink information and the second uplink information may have a same channel type (for example, both the first uplink information and the second uplink information are sent on a PUSCH), and the first uplink information and the second uplink information may be same uplink channel information (for example, the second uplink information is a repetition of the first uplink information). Alternatively, the first uplink information and the second uplink information have a same channel type (for example, both the first uplink information and the second uplink information are sent on a PUSCH), and the first uplink information and the second uplink information are different parts of a same uplink channel. Alternatively, the first uplink information and the second uplink information have a same channel type (for example, both the first uplink information and the second uplink information are sent on a PUSCH), and the first uplink information and the second uplink information are different uplink information. Alternatively, the first uplink information and the second uplink information have different channel types (for example, the first uplink information is sent on a PUCCH, and the second uplink information is sent on a PUSCH). Similarly, for the "third uplink information" and the "fourth uplink information", refer to the foregoing descriptions. Details are not described herein again.

Step 504: The network device receives the first uplink information and the second uplink information.

For example, the network device may receive the first uplink information in the first time unit via the resource inside the uplink BWP, and the network device may receive the second uplink information in the second time unit via the resource inside the uplink BWP.

The frequency retuning exists between the first uplink information and the second uplink information received by the network device, and guard time used for the frequency retuning is greater than or equal to the first processing time. Alternatively, the frequency retuning exists between the first uplink information and the second uplink information received by the network device, and a time interval between an end moment at which the network device receives the first uplink information and a start moment at which the network device receives the second uplink information is greater than or equal to the first processing time.

For example, step 505 is further included: The network device receives the third uplink information and the third uplink information.

For example, the network device may receive the third uplink information in the third time unit, and the network device may receive the fourth uplink information in the fourth time unit.

In this application, a BWP ID used by the network device to receive the third uplink information is the same as a BWP ID used by the network device to receive the fourth uplink information, and at least one of resources used by the network device to receive the fourth uplink information is outside the BWP used for the third uplink information. Alternatively, a BWP ID used by the network device to receive the third uplink information is different from a BWP ID used by the network device to receive the fourth uplink information, and only the BWP center frequency channel numbers in the BWP configurations associated with different BWP IDs are different. Alternatively, a BWP ID used by the network device to receive the third uplink information is different from a BWP ID used by the network device to receive the fourth uplink information, and in addition to the BWP center frequency channel numbers, other configuration parameters in the BWP configurations associated with different BWP IDs are different.

The frequency retuning exists between the third uplink information and the fourth uplink information received by the network device, and guard time used for the frequency retuning is greater than or equal to the second processing time. Alternatively, the frequency retuning exists between the third uplink information and the fourth uplink information received by the network device, and a time interval between an end moment at which the network device receives the third uplink information and a start moment at which the network device receives the fourth uplink information is greater than or equal to the second processing time.

For descriptions of the first time unit to the fourth time unit, the first uplink information to the fourth uplink information, the first processing time, and the second processing time, refer to the descriptions in step 502 and step 503. Details are not described herein again.

According to the foregoing technical solutions, in this application, the terminal device may perform frequency retuning inside or outside the BWP, and cannot transmit the information when performing frequency retuning inside or outside the BWP. Performing frequency retuning inside the BWP requires shorter frequency retuning time (which may also be understood as that the first processing time is less than the second processing time, and the first processing time is also less than the BWP switching time), so that duration of an information transmission interruption can be further reduced, an information transmission delay can be shortened, and information transmission performance can be improved. In addition, according to the method, the terminal device sends uplink information at different frequency channel numbers inside and outside the BWP in a spectrum retuning manner. The first processing time and/or the second processing time, and/or different time values are defined to enable terminals with different capabilities and terminals in different forms and different types to report whether the terminals support the processing time and the time values thereof, to implement the foregoing functions. This meets requirements of different terminals to a maximum extent.

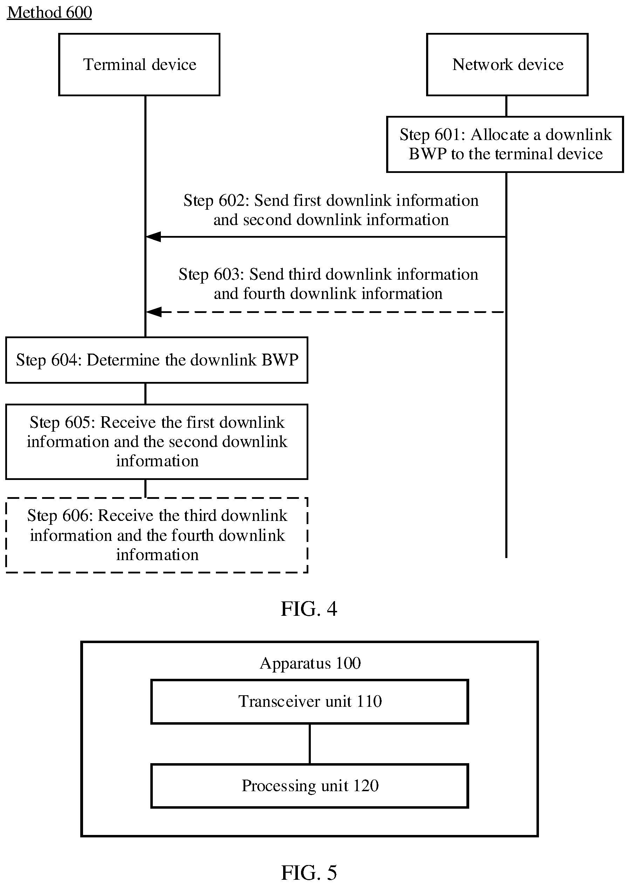

It should be noted that the method 500 is described by using "uplink transmission" as an example, and downlink transmission is similar. FIG. 4 provides an information transmission method 600. A terminal device in FIG. 4 may be a RedCap terminal device, or may be a terminal device in an NR system. The method 600 includes the following steps.

Step 601: A network device allocates a downlink BWP to a terminal device.

For example, the network device may allocate the downlink BWP to the terminal device based on the capability reported by the terminal device in the method 200 to the method 400.

Step 602: The network device sends first downlink information and second downlink information to the terminal device.

For example, the network device sends the first downlink information in a fifth time unit via a resource inside the downlink BWP, and the network device sends the second downlink information in a sixth time unit via a resource inside the downlink BWP.

In this application, frequency retuning exists between the first downlink information and the second downlink information sent by the network device, and guard time used for the frequency retuning is greater than or equal to third processing time. Alternatively, frequency retuning exists between the first downlink information and the second downlink information sent by the network device, and a time interval between an end moment at which the network device sends the first downlink information and a start moment at which the network device sends the second uplink information is greater than or equal to third processing time.

Optionally, step 603 is further included: The network device sends third downlink information and fourth downlink information to the terminal device.

It should be understood that step 602 and step 603 may be used in combination. In this case, the two steps may alternatively not be subject to a specific sequence. Alternatively, step 602 and step 603 may not be combined, and are used as independent solutions.

For example, the network device may send the third downlink information in a seventh time unit, and the network device may send the fourth downlink information in an eighth time unit.

In this application, a BWP ID used by the network device to send the third downlink information is the same as a BWP ID used by the network device to send the fourth downlink information, and at least one of resources used by the network device to send the fourth downlink information is outside a BWP used for the third downlink information. Alternatively, a BWP ID used by the network device to send the third downlink information is different from a BWP ID used by the network device to send the fourth downlink information, and only BWP center frequency channel numbers in BWP configurations associated with different BWP IDs are different. Alternatively, a BWP ID used by the network device to send the third downlink information is different from a BWP ID used by the network device to send the fourth downlink information, and in addition to BWP center frequency channel numbers, other configuration parameters in BWP configurations associated with different BWP IDs are different.

Frequency retuning occurs between the third downlink information and the fourth downlink information sent by the network device, and guard time used for the frequency retuning is greater than or equal to fourth processing time. Alternatively, frequency retuning occurs between the third downlink information and the fourth downlink information sent by the network device, and a time interval between an end moment at which the network device sends the third downlink information and a start moment at which the network device sends the fourth downlink information is greater than or equal to fourth processing time.

In this application, the third processing time and the fourth processing time are different. Alternatively, the third processing time and the fourth processing time are different types of processing time. Alternatively, the third processing time is less than the fourth processing time.

In this application, the third processing time, the fourth processing time, and a BWP switching delay are different. Alternatively, the third processing time, the fourth processing time, and a BWP switching delay may be specified different processing time. Alternatively, the third processing time may be less than the fourth processing time, and the fourth processing time may be less than a BWP switching delay.

For descriptions of the third processing time and the fourth processing time in the method 600, refer to the descriptions of the first processing time and the second processing time in the method 500. Details are not described herein again.

For descriptions of the fifth time unit to the eighth time unit in the method 600, refer to the descriptions of the first time unit to the fourth time unit in step 502 and step 503 in the method 500. Details are not described herein again.

For descriptions of the first downlink information to the fourth downlink information in the method 600, refer to the descriptions of the first uplink information to the fourth uplink information in the method 500. Details are not described herein again.

Step 604: The terminal device determines the downlink bandwidth part BWP.

For example, the downlink BWP may be pre-specified by the network device. For another example, the downlink BWP may be indicated by the network device. For another example, the BWP may be configured by the network device for the terminal device based on a first capability and/or a second capability after the terminal device reports the first capability and/or the second capability in the method 200.

Step 605: The terminal device receives the first downlink information and the second downlink information.

For example, the terminal device may receive the first downlink information in the fifth time unit, and the terminal device may receive the second downlink information in the sixth time unit.

In this application, a resource used to receive the first downlink information may be a resource inside the downlink BWP, and a resource used to receive the second downlink information may also be a resource inside the downlink BWP. In other words, frequency retuning may be performed on the first downlink information and the second downlink information inside the BWP.

The frequency retuning exists between the first downlink information and the second downlink information received by the terminal device, and guard time used for the frequency retuning is greater than or equal to the third processing time. Alternatively, the frequency retuning exists between the first downlink information and the second downlink information received by the terminal device, and a time interval between an end moment of receiving the first downlink information and a start moment of receiving the second downlink information is greater than or equal to the third processing time.

Optionally, step 606 may be further included: The terminal device receives the third downlink information and the fourth downlink information.

It should be understood that step 605 and step 606 may be used in combination. In this case, the two steps may alternatively not be subject to a specific sequence. Alternatively, step 605 and step 606 may not be combined, and are used as independent solutions.

For example, the terminal device may receive the third downlink information in the seventh time unit, and the terminal device receives the fourth downlink information in the eighth time unit.

In this application, as described above, in an implementation (for example, the foregoing scenario 1 and the foregoing scenario 2), a BWP ID used to receive the third downlink information is the same as a BWP ID used to receive the fourth downlink information, and at least one of resources used to receive the fourth downlink information is outside a BWP for the third downlink information. In another implementation (for example, the foregoing scenario 3), a BWP ID used to receive the third downlink information is different from a BWP ID used to receive the fourth downlink information, but only the BWP center frequency channel numbers in the BWP configurations associated with different BWP IDs change. In still another implementation (for example, the foregoing manner 3), a BWP ID used by the terminal device to receive the third downlink information is different from a BWP ID used by the terminal device to receive the fourth downlink information, and in addition to the BWP center frequency channel numbers, other parameter configurations in the BWP configurations associated with different BWP IDs may be different.

When the frequency retuning exists between the third downlink information and the fourth downlink information received by the terminal device, guard time used for the frequency retuning is greater than or equal to the third processing time. Alternatively, the frequency retuning exists between the third downlink information and the fourth downlink information received by the terminal device, and a time interval between an end moment of receiving the third downlink information and a start moment of receiving the fourth downlink information is greater than or equal to the fourth processing time.

According to the foregoing technical solutions, in this application, the terminal device may perform frequency retuning inside or outside the BWP, and cannot transmit the information when performing frequency retuning inside or outside the BWP. Performing frequency retuning inside the BWP requires shorter frequency retuning time (which may also be understood as that the first processing time is less than the second processing time, and the first processing time is also less than the BWP switching time), so that duration of an information transmission interruption can be further reduced, an information transmission delay can be shortened, and information transmission performance can be improved. In addition, according to the method, the terminal device sends uplink information at different frequency channel numbers inside and outside the BWP in a spectrum retuning manner. The first processing time and/or the second processing time, and/or different time values are defined to enable terminals with different capabilities and terminals in different forms and different types to report whether the terminals support the processing time and the time values thereof, to implement the foregoing functions. This meets requirements of different terminals to a maximum extent.

It may be understood that the examples in the method 200 to the method 600 in embodiments of this application are merely intended to help a person skilled in the art understand embodiments of this application, but are not intended to limit embodiments of this application to specific scenarios in the examples. A person skilled in the art clearly can make various equivalent modifications or changes according to the examples in the method 200 to the method 600, and such modifications or changes also fall within the scope of embodiments of this application.

It should be understood that "predefine" in this application may be understood as "define", "predefine", "pre-specify", "store", "pre-store", "pre-negotiate", "pre-configure", "solidify", or "pre-burn". These definitions may also be interchanged.

It may be understood that the term "and/or" in this specification describes only an association relationship between associated objects and indicates that three relationships may exist. For example, A and/or B may represent the following three cases: Only A exists, both A and B exist, and only B exists. In addition, the character "/" in this specification generally indicates an "or" relationship between associated objects.

It should be further understood that numbers "first" and "second" introduced in embodiments of this application are merely used to distinguish between different objects, for example, distinguish between different "capabilities" or "capability parameters". This does not constitute a limitation on embodiments of this application.

It should be further understood that, in the foregoing embodiments, the terminal device and/or the network device may perform some or all of the steps in embodiments. These steps or operations are merely examples. Other operations or variations of various operations may be further performed in embodiments of this application. In addition, the steps may be performed in different sequences presented in embodiments, and not all operations in embodiments of this application may need to be performed. In addition, sequence numbers of the steps do not mean an execution sequence. An execution sequence of the processes should be determined based on functions and internal logic of the processes, and should not constitute any limitation on the implementation processes of embodiments of this application. For example, step 201 and step 202 in the method 200 may not be subject to a specific sequence. For example, in the method 500, step 502 and step 503 may be performed at the same time. For example, the terminal device may send the first uplink information and the third uplink information at the same time. For another example, in step 502 and step 503, the first uplink information to the fourth uplink information may be sent in one piece of signaling at the same time. For another example, step 602 and step 603 may also not be subject to a specific sequence, and may be performed at the same time.

It may be further understood that some optional features in embodiments of this application may be independent of other features in some scenarios, or may be combined with other features in some scenarios. This is not limited.

It may be further understood that embodiments described in this specification may be independent solutions, or may be combined based on internal logic. All these solutions fall within the protection scope of this application. In addition, explanations or descriptions of terms in embodiments may be mutually referenced or explained in embodiments. This is not limited.

In embodiments provided in this application, the methods provided in embodiments of this application are separately described from perspectives of the network device, the terminal device, and interaction between the network device and the terminal device. To implement functions in the method provided in embodiments of this application, the network device and the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

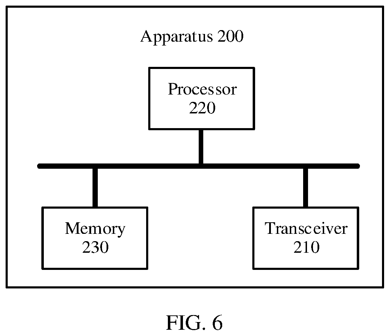

FIG. 5 and FIG. 6 are diagrams of structures of possible information transmission apparatuses according to embodiments of this application. The communication apparatuses may implement the functions of the terminal device or the network device in the foregoing method embodiments. Therefore, beneficial effect of the foregoing method embodiments can also be implemented. In embodiments of this application, the communication apparatus may be the terminal device 120a shown in FIG. 1, the access network device 110a shown in FIG. 1, or a module (like a chip) used in a terminal device or an access network device.

As shown in FIG. 5, an information transmission apparatus 100 includes a transceiver unit 110 and a processing unit 120. The information transmission apparatus 100 may be configured to implement the functions of the terminal device or the network device in the method embodiments shown in the method 200 to the method 600.

When the information transmission apparatus 100 is configured to implement the functions of the terminal device in the method embodiments of the method 200 to the method 400, the transceiver unit 110 is configured to report a first capability and/or a second capability, and the transceiver unit 110 is further configured to: obtain an allocated resource, and send or receive information on the resource.

In a possible design, the transceiver unit 110 is configured to: report the first capability based on a first capability parameter, and/or report the second capability based on a second capability parameter; report the first capability or the second capability based on a third capability parameter; or report the first capability and the second capability based on a fourth capability parameter.

In a possible design, the transceiver unit 110 is configured to send a fifth capability parameter. The fifth capability parameter indicates that the apparatus supports reporting of the first capability and/or the second capability, or the fifth capability parameter indicates that the apparatus does not support reporting of the first capability and/or the second capability. Alternatively, the fifth capability parameter indicates that the apparatus supports reporting of the first capability and/or the second capability, or the fifth capability parameter indicates a third capability of the apparatus, where the third capability includes at least a maximum channel bandwidth supported by the apparatus.

In a possible design, the transceiver unit 110 is further configured to report a fourth capability.

In a possible design, the transceiver unit 110 is further configured to send a seventh capability parameter, where the seventh capability parameter indicates a fifth capability in each of one or more sets.

When the information transmission apparatus 100 is configured to implement the functions of the network device in the method embodiments of the method 200 to the method 400, the transceiver unit 110 is configured to receive a first capability and/or a second capability, the processing unit 110 is further configured to indicate an allocated resource, and the transceiver unit 110 is configured to receive or send information on the resource.

In a possible design, the transceiver unit 110 is configured to: receive the first capability based on a first capability parameter, and/or receive the second capability based on a second capability parameter; receive the first capability or the second capability based on a third capability parameter; or receive the first capability and the second capability based on a fourth capability parameter.

In a possible design, the transceiver unit 110 is configured to receive a fifth capability parameter. The fifth capability parameter indicates that a communication peer apparatus of the apparatus supports reporting of the first capability and/or the second capability, or the fifth capability parameter indicates that the communication peer apparatus of the apparatus does not support reporting of the first capability and/or the second capability. Alternatively, the fifth capability parameter indicates that the communication peer apparatus of the apparatus supports reporting of the first capability and/or the second capability, or the fifth capability parameter indicates a third capability of the communication peer apparatus of the apparatus, where the third capability includes at least a maximum channel bandwidth supported by the apparatus.

In a possible design, the transceiver unit 110 is further configured to obtain a fourth capability.

In a possible design, the transceiver unit 110 is further configured to receive a seventh capability parameter, where the seventh capability parameter indicates a fifth capability in each of one or more sets.

When the information transmission apparatus 100 is configured to implement the functions of the terminal device in the method embodiments of the method 500, the processing unit 120 is configured to determine an uplink BWP. The transceiver unit 110 is configured to send first uplink information in a first time unit via a resource inside the uplink BWP, and the transceiver unit 110 is further configured to send second uplink information in a second time unit via a resource inside the uplink BWP.

In a possible design, the transceiver unit 110 is further configured to send third uplink information in a third time unit, and the transceiver unit 110 is further configured to send fourth uplink information in a fourth time unit.

When the information transmission apparatus 100 is configured to implement the functions of the network device in the method embodiments of the method 500, the processing unit 120 is configured to allocate an uplink BWP. The transceiver unit 110 is configured to receive first uplink information in a first time unit via a resource inside the uplink BWP, and the transceiver unit 110 is further configured to receive second uplink information in a second time unit via a resource inside the uplink BWP.

In a possible design, the transceiver unit 110 is configured to receive third uplink information in a third time unit, and the transceiver unit 110 is further configured to receive fourth uplink information in a fourth time unit.

When the information transmission apparatus 100 is configured to implement the functions of the terminal device in the method embodiments of the method 600, the processing unit 120 is configured to determine a downlink bandwidth part BWP. The transceiver unit 110 is configured to receive first downlink information in a fifth time unit via a resource inside the downlink BWP, and the transceiver unit 110 is further configured to receive second downlink information in a sixth time unit via a resource inside the downlink BWP.

In a possible design, the transceiver unit 110 is configured to receive third downlink information in a seventh time unit, and the transceiver unit 110 is further configured to receive fourth downlink information in an eighth time unit.

When the information transmission apparatus 100 is configured to implement the functions of the network device in the method embodiments of the method 600, the processing unit 120 is configured to allocate a downlink bandwidth part BWP. The transceiver unit 110 is configured to send first downlink information in a fifth time unit via a resource inside the downlink BWP, and the transceiver unit 110 is further configured to send second downlink information in a sixth time unit via a resource inside the downlink BWP.

In a possible design, the transceiver unit 110 is configured to send third downlink information in a seventh time unit, and the transceiver unit 110 is further configured to send fourth downlink information in an eighth time unit.

For more detailed descriptions of the transceiver unit 110 and the processing unit 120, refer to related descriptions in the foregoing method embodiments. Details are not described herein again.

FIG. 6 is a block diagram of an information transmission apparatus 200 according to an embodiment of this application. As shown in the figure, the apparatus 200 includes at least one processor 220. The processor 220 is coupled to a memory, and is configured to execute instructions stored in a memory, to send a signal and/or receive a signal. Optionally, the device 200 further includes the memory 230, configured to store the instructions. Optionally, the device 200 further includes a transceiver 210, and the processor 220 controls the transceiver 210 to send the signal and/or receive the signal.

It should be understood that the processor 220 and the memory 230 may be integrated into one processing device. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (or referred to as a receiver machine) and a transmitter (or referred to as a transmitter machine). The transceiver may further include one or more antennas. The transceiver 210 may be a communication interface or an interface circuit.

Specifically, the transceiver 210 in the device 200 may correspond to the transceiver unit 110 in the device 100, and the processor 220 in the device 200 may correspond to the processing unit 120 in the device 200.

In a solution, the apparatus 200 is configured to implement the operations performed by the terminal device in the foregoing method embodiments.

For example, the processor 220 is configured to execute the computer program or instructions stored in the memory 230, to implement related operations of the terminal devices in the foregoing method embodiments, for example, the method 200 to the method 600.

In another solution, the apparatus 200 is configured to implement operations performed by the network device in the foregoing method embodiments.

For example, the processor 220 is configured to execute the computer program or instructions stored in the memory 230, to implement related operations of the network devices in the foregoing method embodiments, for example, the method 200 to the method 600.

It should be understood that a specific process in which the transceiver and the processor perform the foregoing corresponding steps is described in detail in the method embodiments. For brevity, details are not described herein again.

In an implementation process, the steps in the foregoing methods may be completed by using a hardware integrated logic circuit in the processor, or by using instructions in a form of software. The steps of the methods disclosed with reference to embodiments of this application may be directly performed by a hardware processor, or may be performed by using a combination of hardware and software modules in the processor. The software module may be located in a mature storage medium in the art, for example, a random access memory, a flash memory, a read-only memory, a programmable read-only memory, an electrically erasable programmable memory, a register, or the like. The storage medium is located in the memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, the steps in the foregoing method embodiments may be completed by using a hardware integrated logic circuit in the processor or instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware and software modules in the decoding processor. The software module may be located in a mature storage medium in the art, for example, a random access memory, a flash memory, a read-only memory, a programmable read-only memory, an electrically erasable programmable memory, a register, or the like. The storage medium is located in the memory, and the processor reads the information in the memory and completes the steps in the foregoing methods in combination with the hardware of the processor.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitation, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memories in the systems and methods described in this specification include but are not limited to these memories and any memory of another suitable type.

According to the method provided in embodiments of this application, this application further provides a computer program product. The computer program product stores computer program code, and when the computer program code is run on a computer, the computer is enabled to perform the method performed by the terminal device in any one of embodiments of the method 200 to the method 600.

According to the method provided in embodiments of this application, this application further provides a computer program product. The computer program product stores computer program code, and when the computer program code is run on a computer, the computer is enabled to perform the method performed by the network device in any one of embodiments of the method 200 to the method 600.

According to the method provided in embodiments of this application, this application further provides a computer-readable medium. The computer-readable medium stores computer program code, and when the program code is run on a computer, the computer is enabled to perform the method performed by the terminal device in any one of embodiments of the method 200 to the method 600.

According to the method provided in embodiments of this application, this application further provides a computer-readable medium. The computer-readable medium stores computer program code, and when the program code is run on a computer, the computer is enabled to perform the method performed by the network device in any one of embodiments of the method 200 to the method 600.

For explanations and beneficial effect of related content of any one of the apparatuses provided above, refer to the corresponding method embodiments provided above. Details are not described herein again.

All or some of foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a special-purpose computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disk (solid state disk, SSD)), or the like.

In the foregoing apparatus embodiments, a corresponding module or unit performs a corresponding step. For example, the transceiver unit (transceiver) performs a receiving or sending step in the method embodiments, and a step other than the sending step and the receiving step may be performed by the processing unit (processor). For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, the components may be executed from various computer-readable media that store various data structures. For example, the components may communicate by using a local and/or remote process and based on, for example, a signal having one or more data packets (for example, data from two components interacting with another component in a local system, a distributed system, and/or across a network like the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (read-only memory, ROM), a random access memory (random access memory, RAM), a magnetic disk, an optical disc, or the like that can store program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
reporting, by a terminal device, a first capability and/or a second capability to a network device, wherein
the first capability comprises at least one or more of the following: a maximum radio frequency processing bandwidth supported by the terminal device, a maximum radio frequency processing capability supported by the terminal device, a maximum channel bandwidth supported by the terminal device, that the terminal device supports information transmission on N resource blocks, that the terminal device supports a bandwidth decrease, or that the terminal device supports scheduling limitation, wherein N is an integer greater than 0; and
the second capability comprises at least one or more of the following: a maximum baseband processing bandwidth supported by the terminal device, a maximum baseband processing capability supported by the terminal device, that the terminal device supports information transmission on M resource blocks, that the terminal device does not support a bandwidth decrease, a maximum transport block size supported by the terminal device, a maximum modulation and coding scheme MCS index supported by the terminal device, a scaling factor, or that the terminal device does not supports scheduling limitation, wherein M is an integer greater than 0;
obtaining, by the terminal device, a resource allocated by the network device; and
sending or receiving, by the terminal device, information on the resource.

2. The method according to claim 1, wherein the reporting, by a terminal device, a first capability and/or a second capability to a network device comprises:
reporting, by the terminal device, the first capability to the network device based on a first capability parameter, and/or reporting, by the terminal device, the second capability to the network device based on a second capability parameter;
reporting, by the terminal device, the first capability or the second capability to the network device based on a third capability parameter; or
reporting, by the terminal device, the first capability and the second capability to the network device based on a fourth capability parameter.

3. The method according to claim 2, wherein
the first capability is indicated by the first capability parameter or the third capability parameter, and the second capability is predefined; or
the first capability is predefined, and the second capability is indicated by the second capability parameter or the third capability parameter.

4. The method according to any one of claims 1 to 3, wherein the method further comprises:
sending, by the terminal device, a fifth capability parameter to the network device, wherein
the fifth capability parameter indicates that the terminal device supports reporting of the first capability and/or the second capability, or the fifth capability parameter indicates that the terminal device does not support reporting of the first capability and/or the second capability; or
the fifth capability parameter indicates that the terminal device supports reporting of the first capability and/or the second capability, or the fifth capability parameter indicates a third capability of the terminal device, wherein the third capability comprises at least the maximum channel bandwidth supported by the terminal device.

5. An information transmission method, comprising:
obtaining, by a network device, a first capability and/or a second capability of a terminal device, wherein
the first capability comprises at least one or more of the following: a maximum radio frequency processing bandwidth supported by the terminal device, a maximum radio frequency processing capability supported by the terminal device, a maximum channel bandwidth supported by the terminal device, that the terminal device supports information transmission on N resource blocks, that the terminal device supports a bandwidth decrease, or that the terminal device supports scheduling limitation, wherein N is an integer greater than 0; and
the second capability comprises at least one or more of the following: a maximum baseband processing bandwidth supported by the terminal device, a maximum baseband processing capability supported by the terminal device, that the terminal device supports information transmission on M resource blocks, that the terminal device does not supports a bandwidth decrease, a maximum transport block size supported by the terminal device, a maximum modulation and coding scheme MCS index supported by the terminal device, a scaling factor, or that the terminal device does not supports scheduling limitation, wherein M is an integer greater than 0;
indicating, by the network device, an allocated resource to the terminal device; and
receiving or sending, by the network device, information on the resource.

6. The method according to claim 5, wherein the obtaining, by a network device, a first capability and/or a second capability of a terminal device comprises:
receiving, by the network device, a first capability parameter of the terminal device, wherein the first capability parameter indicates the first capability; and/or receiving, by the network device, a second capability parameter of the terminal device, wherein the second capability parameter indicates the second capability;
receiving, by the network device, a third capability parameter of the terminal device, wherein the third capability parameter indicates the first capability or the second capability; or
receiving, by the network device, a fourth capability parameter of the terminal device, wherein the fourth capability parameter indicates the first capability and the second capability.

7. The method according to claim 6, wherein
the first capability is indicated by the first capability parameter or the third capability parameter, and the second capability is predefined; or
the second capability is indicated by the second capability parameter or the third capability parameter, and the first capability is predefined.

8. The method according to any one of claims 5 to 7, wherein the method further comprises:
receiving, by the network device, a fifth capability parameter of the terminal device, wherein
the fifth capability parameter indicates that the terminal device supports reporting of the first capability and/or the second capability, or the fifth capability parameter indicates that the terminal device does not support reporting of the first capability and/or the second capability; or
the fifth capability parameter indicates that the terminal device supports reporting of the first capability and/or the second capability, or the fifth capability parameter indicates a third capability of the terminal device, wherein the third capability comprises at least the maximum channel bandwidth supported by the terminal device.

9. An information transmission method, comprising:
reporting, by a terminal device, a fourth capability to a network device, wherein
the fourth capability comprises that the terminal device supports a bandwidth part BWP being greater than a first characteristic parametric value of the terminal device, and the first characteristic parametric value comprises at least one or more of the following: a maximum radio frequency processing bandwidth, a maximum radio frequency processing capability, a maximum channel bandwidth, a maximum baseband processing bandwidth, a maximum baseband processing capability, or a resource bandwidth specified by scheduling limitation; and/or
the fourth capability comprises that the terminal device supports a minimum bandwidth part BWP value being greater than or equal to a second characteristic parametric value of the terminal device, and the second characteristic parametric value comprises at least one or more of the following: a bandwidth of a synchronization signal block, a bandwidth of a control resource set, or X resource blocks, wherein X is a positive integer greater than 1;
obtaining, by the terminal device, a resource allocated by the network device; and
sending or receiving, by the terminal device, information on the resource.

10. The method according to claim 9, wherein the reporting, by a terminal device, a fourth capability to a network device comprises:
reporting, by the terminal device, the fourth capability to the network device based on a sixth capability parameter.

11. An information transmission method, comprising:
obtaining, by a network device, a fourth capability of a terminal device, wherein
the fourth capability comprises that the terminal device supports a bandwidth part BWP being greater than a first characteristic parametric value of the terminal device, and the first characteristic parametric value comprises at least one or more of the following: a maximum radio frequency processing bandwidth, a maximum radio frequency processing capability, a maximum channel bandwidth, a maximum baseband processing bandwidth, a maximum baseband processing capability, or a resource bandwidth specified by scheduling limitation; and/or
the fourth capability comprises that the terminal device supports a minimum bandwidth part BWP value being greater than or equal to a second characteristic parametric value of the terminal device, and the second characteristic parametric value comprises at least one or more of the following: a bandwidth of a synchronization signal block, a bandwidth of a control resource set, or X resource blocks, wherein X is a positive integer greater than 1;
indicating, by the network device, an allocated resource to the terminal device; and
receiving or sending, by the network device, information on the resource.

12. The method according to claim 11, wherein the obtaining, by a network device, a fourth capability of a terminal device comprises:
obtaining, by the network device, the fourth capability of the terminal device based on a sixth capability parameter.

13. An information transmission method, comprising:
determining, by a terminal device, an uplink bandwidth part BWP; and
sending, by the terminal device, first uplink information in a first time unit via a resource inside the uplink BWP, and sending, by the terminal device, second uplink information in a second time unit via a resource inside the uplink BWP, wherein
frequency retuning exists between the first uplink information and the second uplink information sent by the terminal device, and guard time used for the frequency retuning is greater than or equal to first processing time; or
frequency retuning exists between the first uplink information and the second uplink information sent by the terminal device, and
a time interval between an end moment at which the terminal device sends the first uplink information and a start moment at which the terminal device sends the second uplink information is greater than or equal to first processing time.

14. The method according to claim 13, wherein the method further comprises:
sending, by the terminal device, third uplink information in a third time unit, and sending, by the terminal device, fourth uplink information in a fourth time unit, wherein a BWP identifier ID used by the terminal device to send the third uplink information is the same as a BWP ID used by the terminal device to send the fourth uplink information, and at least one of resources used by the terminal device to send the fourth uplink information is outside a BWP used to send the third uplink information; or a BWP ID used to send the third uplink information is different from a BWP ID used to send the fourth uplink information, and only BWP center frequency channel numbers in BWP configurations associated with different BWP IDs are different, wherein
frequency retuning exists between the third uplink information and the fourth uplink information sent by the terminal device, and guard time used for the frequency retuning is greater than or equal to second processing time; or
frequency retuning exists between the third uplink information and the fourth uplink information sent by the terminal device, and a time interval between an end moment at which the terminal device sends the third uplink information and a start moment at which the terminal device sends the fourth uplink information is greater than or equal to second processing time.

15. The method according to claim 14, wherein
the first processing time and the second processing time are different;
the first processing time and the second processing time are different types of processing time; or
the first processing time is less than the second processing time.

16. An information transmission method, comprising:
allocating, by a network device, an uplink bandwidth part BWP to a terminal device; and
receiving, by the network device, first uplink information in a first time unit via a resource inside the uplink BWP, and receiving, by the network device, second uplink information in a second time unit via a resource inside the uplink BWP, wherein
frequency retuning exists between the first uplink information and the second uplink information, and guard time used for the frequency retuning is greater than or equal to first processing time; or
frequency retuning exists between the first uplink information and the second uplink information, and a time interval between an end moment of the first uplink information and a start moment of the second uplink information is greater than or equal to first processing time.

17. The method according to claim 16, wherein the method further comprises:
receiving, by the network device, third uplink information in a third time unit, and receiving, by the network device, fourth uplink information in a fourth time unit, wherein a BWP identifier ID used by the network device to receive the third uplink information is the same as a BWP ID used by the network device to receive the fourth uplink information, and at least one of resources used by the network device to receive the fourth uplink information is outside a BWP used to receive the third uplink information; or a BWP ID used to receive the third uplink information is different from a BWP ID used to receive the fourth uplink information, and only BWP center frequency channel numbers in BWP configurations associated with different BWP IDs are different, wherein
frequency retuning exists between the third uplink information and the fourth uplink information, and guard time used for the frequency retuning is greater than or equal to second processing time; or
frequency retuning exists between the third uplink information and the fourth uplink information received by the network device, and
a time interval between an end moment at which the network device receives the third uplink information and a start moment at which the network device receives the fourth uplink information is greater than or equal to second processing time.

18. The method according to claim 17, wherein
the first processing time and the second processing time are different;
the first processing time and the second processing time are different types of processing time; or
the first processing time is less than the second processing time.

19. An information transmission apparatus, comprising a module configured to perform the method according to any one of claims 1 to 4 or claims 5 to 8; comprising a module configured to perform the method according to claim 9 or 10 or claim 11 or 12; or comprising a module configured to perform the method according to any one of claims 13 to 15 or claims 16 to 18.

20. An information transmission apparatus, comprising a processor and a communication interface, wherein the communication interface is configured to: receive a signal from another communication apparatus other than the communication apparatus, and transmit the signal to the processor, or send a signal from the processor to another communication apparatus other than the communication apparatus; and the processor is configured to implement, by using a logic circuit or by executing code instructions, the method according to any one of claims 1 to 4 or claims 5 to 8, the method according to claim 9 or 10 or claim 11 or 12, or the method according to any one of claims 13 to 15 or claims 16 to 18.

21. A computer-readable storage medium, wherein the computer-readable storage medium stores a computer program, and when the computer program is run, the method according to any one of claims 1 to 4 or claims 5 to 8 is implemented, the method according to claim 9 or 10 or claim 11 or 12 is implemented, or the method according to any one of claims 13 to 15 or claims 16 to 18 is implemented.

22. A computer program product, wherein the computer program product comprises computer program code, and when the computer program code is run, the method according to any one of claims 1 to 4 or claims 5 to 8 is implemented, the method according to claim 9 or 10 or claim 11 or 12 is implemented, or the method according to any one of claims 13 to 15 or claims 16 to 18 is implemented.
